# EUROPEAN PATENT SPECIFICATION

(11) **EP 2 947 921 B1**
(45) Date of publication and mention of the grant of the patent: **30.05.2018**
(21) Application number: 13876354.5
(22) Date of filing: 28.02.2013
(51) Int. Cl.: H04W 48/10, H04W 88/10, H04L 12/18, H04W 72/00, H04W 72/04, H04W 52/02, H04W 72/02

(54) **WIRELESS COMMUNICATION METHOD AND DEVICE**
DRAHTLOSKOMMUNIKATIONSVERFAHREN UND -VORRICHTUNG
PROCÉDÉ ET DISPOSITIF DE COMMUNICATION SANS FIL

(43) Date of publication of application: 25.11.2015
(73) Proprietor: Huawei Technologies Co., Ltd., Longgang District Shenzhen, Guangdong 518129 (CN)
(72) Inventor: FANG, Ming, Shenzhen Guangdong 518129 (CN); CHEN, Yanyan, Shenzhen Guangdong 518129 (CN); TAN, Bin, Shenzhen Guangdong 518129 (CN); XING, Pingping, Shenzhen Guangdong 518129 (CN)
(74) Representative: Gill Jennings & Every LLP
(86) International application number: PCT/CN2013/071989
(87) International publication number: WO 2014/131176

(56) References cited:
- CN-A- 1 434 591
- CN-A- 101 442 809
- CN-A- 102 448 199
- CN-A- 102 695 248
- CN-A- 102 695 248
- US-A1- 2011 244 902
- US-A1- 2013 023 267

## Description

### TECHNICAL FIELD

Embodiments of the present invention relate to the field of communications technologies, and in particular, to a radio communications method and device.

### BACKGROUND

With massive application of mobile intelligent user equipments and increase of requirements of radio communications bandwidth, new communications standards and networking modalities are introduced into the field of radio communications. In a specific geographic area, cells of different standards may coexist, for example, a GSM (Global System of Mobile communication, Global System for Mobile Communications) cell, a UMTS (Universal Mobile Telecommunications System, Universal Mobile Telecommunications System) cell, or an LTE (Long Term Evolution, Long Term Evolution) cell. A location of a UE (User Equipment, user equipment) may be covered by multiple cells of different standards concurrently.

In the prior art, each standard has an independent management entity for performing radio resource management. For example, a BSC (Base Station Controller, base station controller) in GSM, an RNC (Radio Network Controller, radio network controller) in UMTS, and an eNB (evolutional Node B, evolved NodeB) in LTE are respectively responsible for functions such as cell power control, channel assignment and resource scheduling, UE handover, and access control for each standard. A cell of each standard has its own logical channel such as a BCCH (Broadcasting Control Channel, broadcast control channel), a CCCH (Common Control Channel, common control channel), and a TCH (Traffic Channel, traffic channel). A management entity such as a base station controller is responsible for management of these logical channels, including management of corresponding physical resources. After registering with a core network of a specific standard, a UE monitors a BCCH of a cell of this standard, acquires related parameters of the cell, such as parameters related to cell access, paging, measurement control, cell reselection, and the like, and initiates access on a CCCH of the cell according to these acquired parameters of the cell and receives a response, or performs monitoring and responds to paging.

In the prior art, when a UE in an idle state moves in coverage areas of different standards, the UE may frequently change a standard on which the UE camps, and keep performing area update and reading a system message (System Information, SI), which increases power consumption of the UE. In addition, the frequent change of the camped-on standard leads to frequent signaling interaction, so that a possibility of network congestion is increased, and complexity of radio resource coordination and management is high. For example, when a UE in an idle state moves from an area of one standard to an area of another standard, a network-side device needs to coordinate camp parameters such as access control parameters and cell reselection parameters across different standards.

Various attempts have been made in the art to modify the broadcast and control techniques used in network.

One example is known from US Pat. No. US 2013/023267, titled, "Idle mode access through assisted discovery" assigned to Nokia Corporation. D1 relates to data offloading using 3GPP femtocell (HNB or HeNB) or wireless local area network (WLAN). D1 does disclose techniques for storing wireless local area network (WLAN) discovery information in a long term evolution (LTE) system information block (SIB) and conversely, storing home nodeB (HNB) discovery information in a vendors-specific information element and broadcasting the home nodeB (HNB) discovery information for use by a mobile device.

Another example is known from CN102695248 A to Huawei Tech Co Ltd. D2 essentially relates to selectively deactivating one or more channels in individual standards in the overlapping coverage area of a multi-RAT network.

### SUMMARY

Embodiments of the present invention provide a radio communications method and device, so that in a process in which a UE in an idle state moves in coverage areas of different standards, a standard on which the UE camps does not need to be changed, thereby reducing complexity of mobility management and reducing signaling overheads.

According to a first aspect, a radio communications method is provided, where the method is applicable to a radio communications system, the radio communications system includes a unified control area, the unified control area includes areas covered by two or more cells of different standards, and the method includes: configuring, by a network-side device, a unified broadcast control channel for the unified control area; and sending, by the network-side device, a broadcast message over the unified broadcast control channel to an idle-state user equipment UE that is located in the unified control area and camps on the unified broadcast control channel.

With reference to the first aspect, in a first implementation manner, the network-side device is a single radio controller SRC, and the SRC is configured to manage radio resources of different standards in the unified control area.

With reference to the first aspect or the first implementation manner of the first aspect, in a second implementation manner, the network-side device configures a unified common control channel; the network-side device sends information of the unified common control channel to the UE, where the information of the unified common control channel is used for the UE receiving or sending a message over the unified common control channel.

With reference to the second implementation manner of the first aspect, in a third implementation manner, the sending configuration information of the unified common control channel to the UE includes: adding the configuration information of the unified common control channel to the broadcast message; and sending the broadcast message to the UE.

With reference to the first aspect or the second implementation manner of the first aspect or the third implementation manner of the first aspect, in a fourth implementation manner, the broadcast message includes one or more types of the following information: an area identifier of the unified control area, where the area identifier of the unified control area is used for the UE identifying an area in which the UE is located; information of a unified location area, where the information of the unified location area is used for the UE performing location update determining; configuration information of at least one standard in the unified control area, where the configuration information of the at least one standard is used for the UE measuring a signal of the at least one standard to obtain a measurement result; and configuration information of a common control channel of at least one standard in the unified control area, where the configuration information of the common control channel of the at least one standard is used for the UE selecting a common control channel of one standard from the common control channel of the at least one standard and initiating an air interface connection establishment procedure over the common control channel of the one standard.

With reference to the second implementation manner or the third implementation manner or the fourth implementation manner of the first aspect, in a fifth possible implementation manner, the unified common control channel includes a downlink unified common control channel, and the method further includes: sending, by the network-side device, a paging message to the UE over the downlink unified common control channel.

With reference to the second implementation manner or the third implementation manner or the fourth implementation manner of the first aspect, in a sixth implementation manner, the unified common control channel includes a downlink unified common control channel and an uplink unified common control channel, and the method further includes: receiving, by the network-side device and over the uplink unified common control channel, an access request message sent by the UE; and sending, by the network-side device, an access response message to the UE over the downlink unified common control channel according to the access request message.

With reference to the fifth implementation manner or the sixth implementation manner of the first aspect, in a seventh implementation manner, the method further includes: selecting, by the network-side device, one standard from the different standards as a target standard; acquiring, by the network-side device, information of a transmission channel assigned to the UE in the target standard; and sending, by the network-side device to the UE over the downlink unified common control channel, the information of the transmission channel that is of the target standard and assigned to the UE, where the information of the transmission channel of the target standard is used for the UE accessing the transmission channel of the target standard and performing transmission of service data or control signaling over the transmission channel of the target standard, where the target standard is any of the different standards.

With reference to the seventh implementation manner of the first aspect, in an eighth implementation manner, when the broadcast message includes the configuration information of the at least one standard in the unified control area, the access request message carries the measurement result of the at least one standard, and the selecting, by the network-side device, one standard from the different standards as a target standard includes: selecting, by the network-side device, one standard from the at least one standard as the target standard according to the measurement result of the at least one standard.

With reference to the fifth implementation manner of the first aspect, in a ninth implementation manner, the paging message carries configuration information of a common control channel of a target standard; or when the broadcast message includes the configuration information of the common control channel of the at least one standard in the unified control area, the paging message carries indication information of a common control channel, so that the UE acquires configuration information of a common control channel of a target standard from the configuration information of the at least one standard in the unified control area according to the indication information of the common control channel, where the target standard is any one of the different standards, and the configuration information of the common control channel of the target standard is used for the UE initiating an air interface connection establishment procedure over the common control channel of the target standard.

With reference to the sixth implementation manner of the first aspect, in a tenth implementation manner, the access response message carries configuration information of a common control channel of a target standard; or when the broadcast message includes the configuration information of the common control channel of the at least one standard in the unified control area, the access response message carries indication information of a common control channel, so that the UE acquires configuration information of a common control channel of a target standard from the configuration information of the at least one standard in the unified control area according to the indication information of the common control channel, where the target standard is any one of the different standards, and the configuration information of the common control channel of the target standard is used for the UE initiating an air interface connection establishment procedure over the common control channel of the target standard.

According to a second aspect, a radio communications method is provided, where the method is applicable to a radio communications system, the radio communications system includes a unified control area, the unified control area includes areas covered by two or more cells of different standards, the unified control area is configured with a unified broadcast control channel, and the method includes: camping, by a user equipment UE located in the unified control area, on the unified broadcast control channel when the UE is in an idle state; and receiving, by the UE and over the unified broadcast control channel, a broadcast message sent by a network-side device, where the UE is located in the unified control area.

With reference to the second aspect, in a first implementation manner, the method further includes:
receiving, by the UE, configuration information, sent by the network-side device, of a unified common control channel, where the configuration information of the unified common control channel is used by the UE to receive or send a message over the unified common control channel according to the configuration information.

With reference to the first implementation manner of the second aspect, in a second implementation manner, the receiving, by the UE, configuration information, sent by the network-side device, of a unified common control channel includes: receiving, by the UE, the broadcast message sent by the network-side device, where the broadcast message includes the configuration information of the unified common control channel; and acquiring, by the UE, the configuration information of the unified common control channel.

With reference to the second aspect or the first implementation manner or the second implementation manner of the second aspect, in a third implementation manner, the broadcast message includes an area identifier of the unified control area, and the method further includes: identifying, by the UE according to the area identifier of the unified control area, an area in which the UE is located; and/or the broadcast message includes information of a unified location area, and the method further includes: performing, by the UE, location update determining according to the information of the unified location area; and/or the broadcast message includes configuration information of at least one standard in the unified control area, and the method further includes: measuring, by the UE according to the configuration information of the at least one standard, a signal of the at least one standard to obtain a measurement result; and/or the broadcast message includes configuration information of a common control channel of at least one standard in the unified control area, and the method further includes: selecting, by the UE, one common control channel from the common control channel of the at least one standard according to the configuration information of the common control channel of the at least one standard, and initiating an air interface connection establishment procedure over the one common control channel.

With reference to the first implementation manner or the second implementation manner or the third implementation manner of the second aspect, in a fourth implementation manner, the unified common control channel includes a downlink unified common control channel, and the method further includes: receiving, over the downlink unified common control channel, a paging message sent by the network-side device.

With reference to the first implementation manner or the second implementation manner or the third implementation manner of the second aspect, in a fifth implementation manner, the unified common control channel includes a downlink unified common control channel and an uplink unified common control channel, and the method further includes: sending an access request message to the network-side device over the uplink unified common control channel; and receiving, over the downlink unified common control channel, an access response message sent by the network-side device according to the access request message.

With reference to the fifth implementation manner of the second aspect, in a sixth implementation manner, when the broadcast message includes the configuration information of the at least one standard in the unified control area, the access request message carries the measurement result of the at least one standard, and the measurement result of the at least one standard is used for the network-side device selecting one standard from the at least one standard as a target standard.

With reference to the fourth implementation manner or the fifth implementation manner or the sixth implementation manner of the second aspect, in a seventh implementation manner, the method further includes: receiving, by the UE over the downlink unified common control channel, information, sent by the network-side device, of a transmission channel assigned to the UE in the target standard, where the target standard is any one of the different standards; and accessing, by the UE, the transmission channel according to the information of the transmission channel of the target standard, and performing transmission of service data or control signaling over the transmission channel of the target standard.

With reference to the fourth implementation manner of the second aspect, in an eighth implementation manner, the paging message carries configuration information of a common control channel of a target standard, and the method further includes: initiating, by the UE, an air interface connection establishment procedure over the common control channel of the target standard according to the configuration information of the common control channel of the target standard; or
when the broadcast message includes the configuration information of the common control channel of the at least one standard in the unified control area and configuration information of a common control channel of a target standard exists in the configuration information of the common control channel of the at least one standard, the paging message carries indication information of a common control channel, and the method further includes: acquiring, by the UE, the configuration information of the common control channel of the target standard from the configuration information of the common control channel of the at least one standard according to the indication information of the common control channel, and initiating an air interface connection establishment procedure over the common control channel of the target standard according to the configuration information of the common control channel of the target standard, where
the target standard is any one of the different standards.

With reference to the fifth implementation manner or the sixth implementation manner of the second aspect, in a ninth implementation manner, the access response message carries configuration information of a common control channel of the target standard, and the method further includes: initiating, by the UE, an air interface connection establishment procedure over the common control channel of the target standard according to the configuration information of the common control channel of the target standard; or
when the broadcast message includes the configuration information of the common control channel of the at least one standard in the unified control area and configuration information of a common control channel of the target standard exists in the configuration information of the common control channel of the at least one standard, if the access response message carries indication information of a common control channel, the method further includes: acquiring, by the UE, the configuration information of the common control channel of the target standard from the configuration information of the common control channel of the at least one standard according to the indication information of the common control channel, and initiating an air interface connection establishment procedure over the common control channel of the target standard according to the configuration information of the common control channel of the target standard, where
the target standard is any one of the different standards.

According to a third aspect, a network-side device is provided, including: a configuring unit, configured to configure a unified broadcast control channel for a unified control area, where the unified control area includes areas covered by two or more cells of different standards; and a sending unit, configured to send, over the unified broadcast control channel configured by the configuring unit, a broadcast message to an idle-state user equipments UE that is located in the unified control area and camps on the unified broadcast control channel.

With reference to the third aspect, in a first implementation manner, the configuring unit is further configured to configure a unified common control channel; and the sending unit is further configured to send configuration information of the unified common control channel to the UE, where the configuration information of the unified common control channel is used for the UE receiving or sending a message over the unified common control channel.

With reference to the first implementation manner of the third aspect, in a second implementation manner, the sending unit is further configured to send the configuration information of the unified common control channel to the UE by adding the configuration information of the unified common control channel to the broadcast message.

With reference to the third aspect or the first implementation manner or the second implementation manner of the third aspect, in a third implementation manner, the broadcast message includes one or more types of the following information:
an area identifier of the unified control area, where the area identifier of the unified control area is used for the UE identifying an area in which the UE is located, the broadcast message includes information of a unified location area, and the information of the unified location area is used for the UE performing location update determining; and
the broadcast message includes configuration information of at least one standard in the unified control area, where the configuration information of the at least one standard is used for the UE measuring a signal of the at least one standard to obtain a measurement result, and the broadcast message includes configuration information of a common control channel of at least one standard in the unified control area, where the configuration information of the common control channel of the at least one standard is used for the UE selecting a common control channel of one standard from the common control channel of the at least one standard and initiating an air interface connection establishment procedure over the common control channel of the one standard.

With reference to the first implementation manner or the second implementation manner or the third implementation manner of the third aspect, in a fourth implementation manner, the unified common control channel includes a downlink unified common control channel, and the sending unit is further configured to send a paging message to the UE over the downlink unified common control channel.

With reference to the first implementation manner or the second implementation manner or the third implementation manner of the third aspect, in a fifth implementation manner, the unified common control channel includes a downlink unified common control channel and an uplink unified common control channel, and the network-side device further includes a receiving unit; where the receiving unit is configured to receive, over the uplink unified common control channel, an access request message sent by the UE; and the sending unit is further configured to send an access response message to the UE over the downlink unified common control channel according to the access request message received by the receiving unit.

With reference to the fourth implementation manner or the fifth implementation manner of the third aspect, in a sixth implementation manner, the sending unit is further configured to select one standard from the different standards as a target standard;
acquire information of a transmission channel that is of the target standard and assigned to the UE in the target standard; and
send, to the UE over the downlink unified common control channel, the information of the transmission channel that is of the target standard and assigned to the UE, where the information of the transmission channel of the target standard is used for the UE accessing the transmission channel of the target standard and perform transmission of service data or control signaling over the transmission channel of the target standard, where the target standard is any one of the different standards.

With reference to the sixth implementation manner of the third aspect, in a seventh implementation manner, when the broadcast message includes the configuration information of the at least one standard in the unified control area, the access request message carries the measurement result of the at least one standard; and
the configuring unit is further configured to select one standard from the at least one standard as the target standard according to the measurement result of the at least one standard.

With reference to the fourth implementation manner of the third aspect, in an eighth implementation manner, the paging message carries configuration information of a common control channel of a target standard; or
when the broadcast message includes the configuration information of the common control channel of the at least one standard in the unified control area, the paging message carries indication information of a common control channel, so that the UE acquires configuration information of a common control channel of a target standard from the configuration information of the at least one standard in the unified control area according to the indication information of the common control channel, where
the configuration information of the common control channel of the target standard is used for the UE initiating an air interface connection establishment procedure over the common control channel of the target standard.

With reference to the fifth implementation manner of the third aspect, in a ninth implementation manner, the access response message carries configuration information of a common control channel of a target standard; or
when the broadcast message includes the configuration information of the common control channel of the at least one standard in the unified control area, the access response message carries indication information of a common control channel, so that the UE acquires configuration information of a common control channel of a target standard from the configuration information of the at least one standard in the unified control area according to the indication information of the common control channel, where
the target standard is any one of the different standards, and the configuration information of the common control channel of the target standard is used for the UE initiating an air interface connection establishment procedure over the common control channel of the target standard.

According to a fourth aspect, a user equipment is provided, where the user equipment UE is located in a unified control area, the unified control area includes areas covered by two or more cells of different standards, the unified control area is configured with a unified broadcast control channel, and the user equipment includes: a control unit, configured to control, when the UE is in an idle state, the user equipment to camp on the unified broadcast control channel of the unified control area; and
a receiving unit, configured to receive, over the unified broadcast control channel on which the user equipment camps under control of the control unit, a broadcast message sent by a network-side device, where
the UE is located in the unified control area, and the unified control area includes the areas covered by the two or more cells of different standards;

With reference to the fourth aspect, in a first implementation manner, the receiving unit is further configured to receive configuration information, sent by the network-side device, of a unified common control channel; and
the control unit is further configured to receive or send a message over the unified common control channel according to the information of the unified common control channel that is received by the receiving unit.

With reference to the first implementation manner of the fourth aspect, in a second implementation manner, the receiving unit is further configured to receive the broadcast message sent by the network-side device, where the broadcast message includes the configuration information of the unified common control channel; and
acquire the configuration information of the unified common control channel.

With reference to the fourth aspect or the first implementation manner or the second implementation manner of the fourth aspect, in a third implementation manner, the broadcast message includes an area identifier of the unified control area, and the control unit is further configured to identify, according to the area identifier of the unified control area, that the UE is located in the unified control area; and/or
the broadcast message includes information of a unified location area, and the control unit is further configured to perform location update determining according to the information of the unified location area; and/or
the broadcast message includes configuration information of at least one standard in the unified control area, and the control unit is further configured to measure, according to the configuration information of the at least one standard, a signal of the at least one standard to obtain a measurement result; and/or
the broadcast message includes configuration information of a common control channel of at least one standard in the unified control area, and the control unit is further configured to: select a common control channel of one standard from the common control channel of the at least one standard according to the configuration information of the common control channel of the at least one standard, and initiate an air interface connection establishment procedure over the common control channel of the one standard.

With reference to the first implementation manner or the second implementation manner or the third implementation manner of the fourth aspect, in a fourth implementation manner, the unified common control channel includes a downlink unified common control channel, and
the receiving unit is specifically configured to receive, over the downlink unified common control channel, a paging message sent by the network-side device.

With reference to the first implementation manner or the second implementation manner or the third implementation manner of the fourth aspect, in a fifth implementation manner, the unified common control channel includes a downlink unified common control channel and an uplink unified common control channel,
the user equipment further includes a sending unit, configured to send an access request message to the network-side device over the uplink unified common control channel; and
the receiving unit is further configured to receive, over the downlink unified common control channel, an access response message sent by the network-side device.

With reference to the fifth implementation manner of the fourth aspect, in a sixth implementation manner, when the broadcast message includes the configuration information of the at least one standard in the unified control area, the access request message carries the measurement result of the at least one standard, and the measurement result of the at least one standard is used for the network-side device determining a transmission channel of a target standard.

With reference to the fourth implementation manner or the fifth implementation manner or the sixth implementation manner of the fourth aspect, in a seventh implementation manner, the receiving unit is further configured to receive, over the downlink unified common control channel, information, sent by the network-side device, of a transmission channel that is of the target standard and assigned to the UE, where the target standard is any one of the different standards; and
the control unit is further configured to: access the transmission channel according to the information of the transmission channel of the target standard, and perform transmission of service data or control signaling over the transmission channel of the target standard.

With reference to the fourth implementation manner of the fourth aspect, in an eighth implementation manner, the paging message carries configuration information of a common control channel of a target standard, and the control unit is further configured to initiate an air interface connection establishment procedure over the common control channel of the target standard according to the configuration information of the common control channel of the target standard; or
when the broadcast message includes the configuration information of the common control channel of the at least one standard in the unified control area and configuration information of a common control channel of a target standard exists in the configuration information of the common control channel of the at least one standard, if the paging message carries indication information of a common control channel, the control unit is further configured to: acquire the configuration information of the common control channel of the target standard from the configuration information of the common control channel of the at least one standard according to the indication information of the common control channel, and initiate an air interface connection establishment procedure over the common control channel of the target standard according to the configuration information of the common control channel of the target standard, where
the target standard is any one of the different standards.

With reference to the fifth implementation manner or the sixth implementation manner of the fourth aspect, in a ninth implementation manner, the access response message carries configuration information of a common control channel of the target standard, and the control unit is further configured to initiate an air interface connection establishment procedure over the common control channel of the target standard according to the configuration information of the common control channel of the target standard; or
when the broadcast message includes the configuration information of the common control channel of the at least one standard in the unified control area and configuration information of a common control channel of the target standard exists in the configuration information of the common control channel of the at least one standard, if the access response message carries indication information of a common control channel, the control unit is further configured to: acquire the configuration information of the common control channel of the target standard from the configuration information of the common control channel of the at least one standard according to the indication information of the common control channel, and initiate an air interface connection establishment procedure over the common control channel of the target standard according to the configuration information of the common control channel of the target standard, where
the target standard is any one of the different standards.

In the embodiments of the present invention, a network-side device configures a unified broadcast control channel, and sends a broadcast message over the unified broadcast control channel, so that a UE in an idle state camps on the unified broadcast control channel to intercept the broadcast message. Therefore, in a process in which the UE moves in coverage areas of different standards in the unified control area, a standard on which the UE camps does not need to be changed, thereby reducing complexity of radio resource coordination and management, reducing signaling overheads, and reducing power consumption of the UE. The invention is disclosed in the appended claims.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1-1 to FIG. 1-3 are schematic diagrams of application scenarios applicable to an embodiment of the present invention;
FIG. 2 is a flowchart of a radio communications method according to an embodiment of the present invention;
FIG. 3 is a schematic diagram of another application scenario applicable to an embodiment of the present invention;
FIG. 4 is a flowchart of a radio communications method according to another embodiment of the present invention;
FIG. 5 is a schematic flowchart of a process of a radio communications method according to an embodiment of the present invention;
FIG. 6 is a schematic flowchart of a process of a radio communications method according to another embodiment of the present invention;
FIG. 7 is a schematic flowchart of a process of a radio communications method according to still another embodiment of the present invention;
FIG. 8 is a schematic flowchart of a process of a radio communications method according to still another embodiment of the present invention;
FIG. 9 is a structural block diagram of a network-side device according to an embodiment of the present invention;
FIG. 10 is a structural block diagram of a user equipment according to an embodiment of the present invention;
FIG. 11 is a schematic block diagram of a device according to an embodiment of the present invention;
FIG. 12 is a structural block diagram of a network-side device according to another embodiment of the present invention; and
FIG. 13 is a structural block diagram of a user equipment according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as: a GSM system, a CDMA (Code Division Multiple Access, Code Division Multiple Access) system, a WCDMA (Wideband Code Division Multiple Access, Wideband Code Division Multiple Access) system, a GPRS (General Packet Radio Service, general packet radio service) system, an LTE system, an LTE FDD (Frequency Division Duplex, frequency division duplex) system, an LTE TDD (Time Division Duplex, time division duplex) system, a UMTS system, a WiMAX (Worldwide Interoperability for Microwave Access, Worldwide Interoperability for Microwave Access) communications system.

In the embodiments of the present invention, the base station may be a BTS (Base Transceiver Station, base transceiver station) in GSM or CDMA, or may be an NB (NodeB, NodeB) in WCDMA, or BS (Base Station, base station) in UMTS, or may further be an eNB in LTE, which is not limited in the present invention.

The base station controller may be a BSC in GSM or CDMA, or may be an RNC in WCDMA, or may further be integrated into an eNB in LTE.

It should also be understood that, in the embodiments of the present invention, a user equipment may also be referred to as a terminal (Terminal), an MS (Mobile Station, mobile station), a mobile terminal (Mobile Terminal), and the like. The user equipment may communicate with one or more core networks by using a RAN (Radio Access Network, radio access network). For example, the user equipment may be a mobile phone (or referred to as a "cellular" phone), or a computer with a mobile terminal; for example, the user equipment may also be a portable, pocket-sized, handheld, computer built-in, or in-vehicle mobile apparatus, which exchanges voice and/or data with the radio access network.

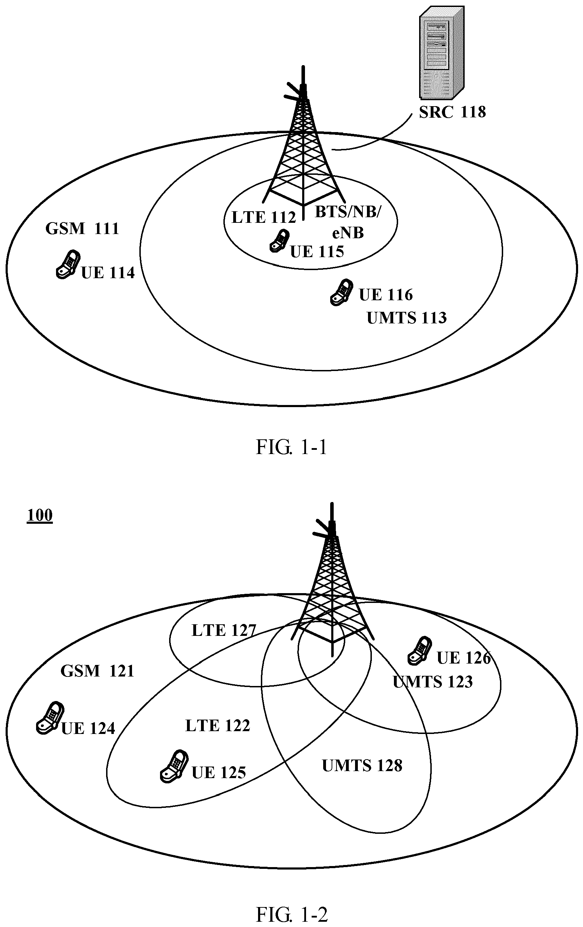

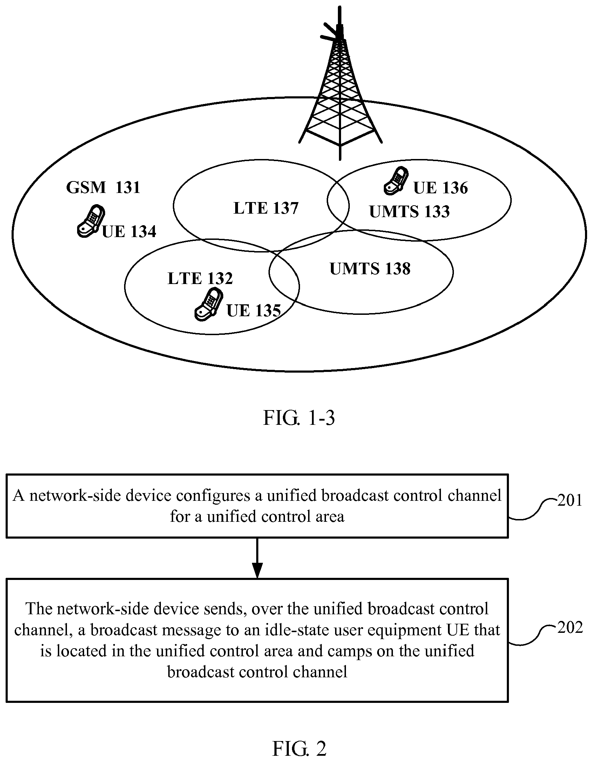

FIG. 1-1 to FIG. 1-3 are schematic diagrams of application scenarios applicable to an embodiment of the present invention. In FIG. 1-1 to FIG. 1-3, coverage areas of three different standards are described: a GSM area, a UMTS area, and an LTE area separately, which, however, are intended for ease of description only. In FIG. 1-1 to FIG. 1-3, areas of two standards or areas of more standards may be included, and the standards are not limited to standards specified by 3GPP (The 3rd Generation Partnership Project, the 3rd Generation Partnership Project)/3GPP2, which is not limited in the embodiments of the present invention. An area of a same standard may be one or more in number. For example, in a scenario in FIG. 1-1, one GSM area, one UMTS area, and one LTE area are described; in FIG. 1-2, one GSM area, two UMTS areas, and two LTE areas are described; and in a scenario in FIG. 1-3, one GSM area, two UMTS areas, and one LTE area are described, which is not limited in the embodiments of the present invention. In the scenarios in FIG. 1-1 to FIG. 1-3, UEs located in areas of different standards are also described: a UE 114 in a GSM area GSM 111, a UE 115 in an LTE area LTE 112, and a UE 116 in a UMTS area UMTS 113 in FIG. 1-1; a UE 124 in a GSM area GSM 121, a UE 125 in an LTE area LTE 122, and a UE 126 in a UMTS area UMTS 123 in FIG. 1-2; and a UE 134 in a GSM area GSM 131, a UE 135 in an LTE area LTE 132, and a UE 136 in a UMTS area UMTS 133 in FIG. 1-3. It should be understood that in the scenarios in FIG. 1-1 to FIG. 1-3, more or fewer UEs may be included; it should also be understood that a UE may be a UE that supports one standard, or a UE that supports multiple standards, which is not limited in the embodiments of the present invention. It should also be noted that a layout manner of each area in coverage areas of different standards in the scenarios in FIG. 1-1 to FIG. 1-3 is merely exemplary, which is not limited in the present invention.

In an existing mechanism, an area of each standard has its own logical channel. For example, in FIG. 1-1, the network-side device needs to broadcast three sets of independent system messages to the GSM area GSM 111, the UMTS area UMTS 113, and the LTE area LTE 112 respectively, for example, broadcast a same mobility-related parameter such as an area reselection priority and a reselection threshold. Each standard has an independent management entity, which needs to manage its own broadcast channel, and mobility-related parameters broadcast by cells of different standards need to be coordinated. Therefore, management is relatively complex. In addition, public information, such as air interface control signaling or the mobility-related parameters, needs to be repeatedly delivered in coverage areas of different standards, which increases signaling overheads.

To solve the foregoing problems, embodiments of the present invention provide a radio communications method and a network-side device, which can not only reduce management complexity but can also effectively reduce signaling overheads.

In the present invention, a single radio controller (Single Radio Controller, SRC) may be used to manage radio resources of various standards, which can enable more efficient, more flexible, and faster use of the radio resources of various standards. In addition, a location of the SRC may be flexibly set, and the SRC may be located on a base station side or used as an independent entity. An SRC 118 in FIG. 1-1 is a simple example.

FIG. 2 is a flowchart of a radio communications method according to an embodiment of the present invention. The method in FIG. 2 is applicable to a radio communications system, where the radio communications system includes a unified control area, and the unified control area includes areas covered by two or more cells of different standards.

201. A network-side device configures a unified broadcast control channel (Uni-BCCH) for a unified control area.

The uni-BCCH refers to a unified broadcast channel used to send a broadcast message for multiple standards within a specified geographic area range, that is, in the unified control area; a separate segment of spectrum resources may be assigned to the uni-BCCH, or the uni-BCCH may be configured on a specific standard. For example, a coverage range of a cell of a GSM standard is wide, and the uni-BCCH may be configured on GSM, which is not limited herein.

For example, the unified control area may be a GSM 111 in FIG. 1-1, or a GSM 121 in FIG. 1-2, or a GSM 131 in FIG. 1-3.

The network-side device may be a single radio controller SRC, and the SRC is configured to manage radio resources of different standards in the unified control area, for example, an SRC in FIG. 1-1.

202. The network-side device sends, over the unified broadcast control channel, a broadcast message to an idle-state user equipment UE that is located in the unified control area and camps on the unified broadcast control channel.

The broadcast message may include one or more types of the following information:
an area identifier of the unified control area, which is used for the UE identifying an area in which the UE is located, that is, used by the UE to identify the unified control area in which the UE is located;
information of a unified location area, where the information of the unified location area is used by the UE to perform location update determining;
configuration information of at least one standard in the unified control area, where the configuration information of the at least one standard is used by the UE to measure a signal of the at least one standard to obtain a measurement result, for example, the UE measures a reference signal in a coverage area of the LTE standard, to obtain received power or quality of the reference signal; and
configuration information of a common control channel of at least one standard in the unified control area, where the configuration information of the common control channel of the at least one standard is used by the UE to select a common control channel of one standard from the common control channel of the at least one standard and initiate an air interface connection establishment procedure over the selected common control channel of the one standard.

For example, when the unified control area includes a GSM area, the configuration information may include information such as a band and a frequency channel number of a traffic channel. When the unified control area includes a UMTS/LTE area, the configuration information may include information such as a frequency channel number and bandwidth of a traffic channel.

In this embodiment of the present invention, a network-side device configures a unified broadcast control channel for a unified control area, and sends a broadcast message over the unified broadcast control channel, so that a UE in an idle state camps on the unified broadcast control channel to intercept the broadcast message. Therefore, in a process in which the UE moves in coverage areas, in the unified control area, of different standards, a standard on which the UE camps does not need to be changed, thereby reducing complexity of radio resource coordination and management, reducing signaling overheads, and reducing power consumption of the UE.

It should be noted that, in cells, in the unified control area, of different standards, broadcast control channels of their respective standards do not need to be configured, so that the cells of different standards do not need to manage their respective broadcast channels and do not need to coordinate broadcast messages of the cells of different standards; or in the cells, in the unified control area, of different standards, broadcast control channels of respective standards of the cells are configured, and in this case, a same broadcast message is repeatedly transmitted in the coverage areas of the different standards. Therefore, by using only the unified broadcast control channel to send the same broadcast message to UEs covered by the cells of different standards, signaling overheads can be further reduced.

Optionally, in an implementation scenario, before step 202, the following is further included:
203. The network-side device configures a unified common control channel (Uni-CCCH) for the unified control area.
204. The network-side device sends configuration information of the unified common control channel to the UE, where the configuration information of the unified common control channel is used for the UE sending or receiving a message over the unified common control channel.

The message may be an access request message, an access response message, or a paging message, which is not limited herein; the unified common control channel is configured for the unified control area.

Specifically, the configuration information of the unified common control channel may be sent to the UE in the following two manners:
Manner 1: The configuration information of the unified common control channel is sent to the UE by being added to the broadcast message.
Manner 2: The configuration information of the unified common control channel is sent to the UE by being added to a newly added message.

It should be noted that the UE located in the unified control area may send an access request message to the network-side device over the unified common control channel, or receive an access response message sent by the network-side device, or receive related parameter information such as a paging message sent by the network-side device.

The unified common control channel in step 204 may include an uplink unified common control channel and/or a downlink unified common control channel, and may be specifically a physical channel, a transmission channel, a logical channel, or the like, for example, a Uni-RACH (Random Access Channel, access channel) in the uplink unified common control channel, or a Uni-AGCH (Access Grant Channel, access grant channel) or a Uni-PCH (Paging Channel, unified paging channel), which responds to the Uni-RACH, in the downlink common control channel.

Optionally, in a first implementation manner in the foregoing implementation scenario, after step 204, the following is further included: sending, by the network-side device, a paging message to the UE over the downlink unified common control channel (such as a Uni-PCH channel).

Optionally, in a second implementation manner in the foregoing implementation scenario, after step 204, the following is further included:
receiving, by the network-side device and over the uplink unified common control channel (such as a Uni-RACH channel), an access request message sent by the UE; and
sending, by the network-side device, an access response message to the UE over the downlink unified common control channel (such as a Uni-AGCH channel) according to the access request message.

The paging message, the access request message, and the access response message all belong to the prior art, and are not further described herein.

Optionally, in a third implementation manner in the foregoing implementation scenario, after the UE accesses a network, that is, after step 204, the following is further included:
selecting, by the network-side device, one standard from the different standards as a target standard;
acquiring, by the network-side device, information of a transmission channel assigned to the UE in the target standard; and
sending, by the network-side device, the information of the transmission channel of the target standard to the UE over the downlink unified common control channel.

The information of the transmission channel of the target standard is used by the UE to access the transmission channel of the target standard and perform transmission of service data or control signaling over the transmission channel of the target standard. Specifically, the information of the transmission channel of the target standard may include configuration parameters of a corresponding logical channel, transmission channel, and/or physical channel. For example, when the target standard is UMTS/LTE, the transmission channel may be one or more of: a DTCH (Dedicated Traffic Channel, dedicated traffic channel), a CTCH (Common Traffic Channel, common traffic channel or shared traffic channel), a DCCH (Dedicated Control Channel, dedicated control channel), and the like. When the target standard is GSM, the transmission channel may be one or more of: a DCCH, a TCH, a PDTCH (Packet Data Traffic Channel, packet data traffic channel), a PACCH (Packet Associated Control Channel, packet associated control channel), and the like. In addition, the transmission channel of the target standard may be assigned by a network control node of the target standard, or may be assigned by an SRC, which is not limited herein.

Specifically, when the broadcast message includes the configuration information of the at least one standard in the unified control area, the access request message carries the measurement result of the at least one standard, and the selecting, by the network-side device, one standard from the different standards as a target standard includes:
selecting one standard from the at least one standard as the target standard according to the measurement result of the at least one standard.

It should be noted that the network-side device may also determine the target standard according to a type of a service initiated by the UE or a standard supported by the UE or various preset standard priorities, which is not limited herein.

Optionally, the network-side device may add configuration information of a CCCH channel of the target standard to the paging message, so that a UE that supports the target standard can initiate an air interface connection establishment procedure over the CCCH channel of the target standard according to the configuration information of the CCCH channel of the target standard; or when the broadcast message includes the configuration information of the common control channel of the at least one standard in the unified control area and configuration information of a common control channel of the target standard exists in the configuration information of the common control channel of the at least one standard, the network-side device may add indication information of a CCCH channel to the paging message, so that the UE acquires configuration information of a CCCH channel of the target standard from the configuration information of the common control channel of the at least one standard according to the indication information of the CCCH channel, and initiates an air interface connection establishment procedure over the CCCH channel of the target standard according to the configuration information of the CCCH channel of the target standard.

Specifically, if the broadcast message includes configuration information of CCCH channels of multiple standards (including the target standard), the paging message may indicate the configuration information of the CCCH channel of the target standard by using the indication information as an index. The UE that supports the target standard can acquire the configuration information of the CCCH channel of the target standard by using the index, and initiate an air interface connection establishment procedure over the CCCH channel of the target standard. The LTE standard is used as an example of the target standard. A UE that supports the LTE standard may send an RRC (Radio Resource Connection, radio resource control) connection request message over a CCCH channel of the LTE standard according to configuration information of the CCCH channel of the LTE standard. Further, the network-side device may add configuration information of a dedicated channel (such as a DTCH channel and a DCCH channel) of the LTE standard to an RRC connection response message sent over the CCCH channel of the LTE standard to the UE that supports the LTE standard.

Optionally, the network-side device may add configuration information of a CCCH of the target standard to the access response message, so that a UE that supports the target standard can initiate an air interface connection establishment procedure over the CCCH channel of the target standard; or when the broadcast message includes the configuration information of the common control channel of the at least one standard in the unified control area and configuration information of a common control channel of the target standard exists in the configuration information of the common control channel of the at least one standard, the network-side device may add indication information of a CCCH channel to the access response message, so that the UE acquires the configuration information of the CCCH channel of the target standard from the configuration information of the common control channel of the at least one standard according to the indication information of the CCCH channel, and initiates an air interface connection establishment procedure over the CCCH channel of the target standard according to the configuration information of the CCCH channel of the target standard.

Specifically, if the broadcast message includes configuration information of CCCH channels of multiple standards (including the target standard), the access response message may indicate the configuration information of the CCCH channel of the target standard by using the indication information as an index, so that the UE that supports the target standard can initiate an air interface connection establishment procedure over the CCCH channel of the target standard. An LTE standard is used as an example of the target standard. A UE that supports the LTE standard may send an RRC connection request message over a CCCH channel of the LTE standard according to configuration information of the CCCH channel of the LTE standard. Further, the network-side device may add configuration information of a dedicated channel (such as a DTCH channel and a DCCH channel) of the LTE standard to an RRC connection response message sent over the CCCH channel of the LTE standard to the UE that supports the LTE standard.

In an existing mechanism, the network-side device needs to broadcast configuration information of common control channels of respective standards to coverage areas of different standards. Only after a UE that camps on a coverage area of a different standard needs to implement access in the standard on which the UE camps and establish a traffic channel, the UE can be handed over to a traffic channel of another standard to implement a service, but the service cannot be quickly established across standards. In addition, a UE in an idle (Idle) mode needs to implement access by using multiple independent procedures. The UE has to complete a CCCH procedure of a specific standard before entering another mode, and therefore, the UE cannot be quickly handed over to another standard to perform offloading.

In the foregoing implementation scenario of this embodiment of the present invention, a network-side device configures a unified broadcast control channel for a unified control area, and sends a broadcast message over the unified broadcast control channel, so that a UE in an idle state camps on the unified broadcast control channel to intercept the broadcast message. Therefore, in a process in which the UE moves in coverage areas, in the unified control area, of different standards, a standard on which the UE camps does not need to be changed, thereby reducing complexity of radio resource coordination and management, reducing signaling overheads, and reducing power consumption of the UE. In addition, the network-side device configures a unified common control channel, so that the UE can quickly access a network and implement fast offloading across standards, thereby meeting a service requirement and reducing a delay.

Optionally, in another implementation scenario, the broadcast message includes information of a unified location area. One unified location area may include one or more unified control areas. The information of the unified location area is used by a UE located in the unified control area to perform area update determining. Area update may include LAU (Location Area Update, location area update), RAU (Routing Area Update, routing area update). TAU (Tracking Area Update, tracking area update), or the like.

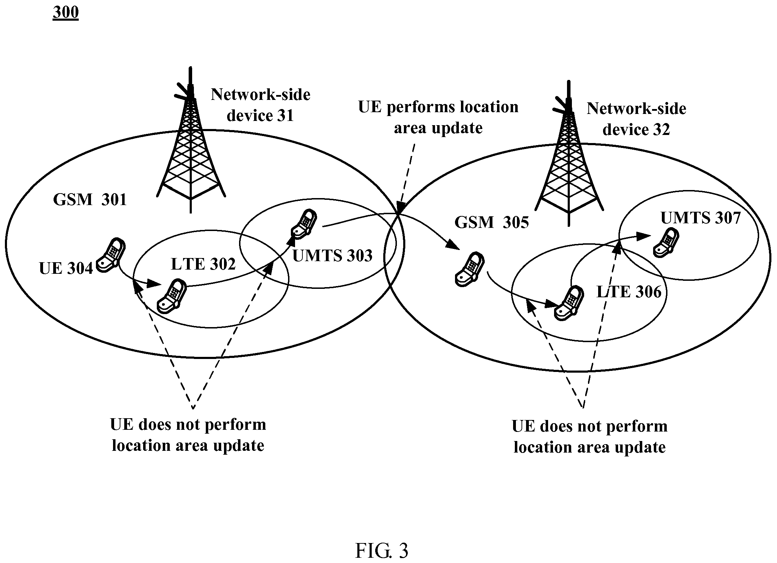

For example, as shown in FIG. 3, a coverage area broadcast by a network-side device 31 on a unified broadcast control channel is a coverage area of a GSM 301, that is, information of a first unified area; a coverage area broadcast by a network-side device 32 on the unified broadcast control channel is a coverage area of a GSM 305, that is, information of a second unified area. The first unified area and the second unified area are different areas. A UE 304 is located in the GSM area GSM 301, and information, received from the network-side device 31, of a broadcast unified area is the coverage area of the GSM 301. When the UE 304 moves from the GSM 301 to an LTE area LTE 302 or moves from an LTE 302 to a UMTS area UMTS 303, the UE 304 does not perform location area update. When the UE 304 moves from the LTE 302 to a GSM 305 and is beyond the coverage range of the GSM 301, the UE 304 performs location area update. After performing the location area update, the UE 304 is located in the GSM 305, and information, received from the network-side device 32, of a broadcast unified area is the coverage area of the GSM 305. If the UE 304 moves from the GSM 305 to the LTE 306 or moves from the LTE 306 to a UMTS 307 or moves from the GSM 305 to a UMTS 307, the UE 304 does not perform location area update.

It should be understood that the foregoing implementation scenario is merely exemplary and is not intended to limit the scope of the present invention.

In the prior art, when a UE camps on a standard with discontinuous coverage, as a result of movement of the UE, the UE moves out of coverage of a cell of this standard. Therefore, the UE needs to frequently change a standard on which the UE camps, and keep performing area update and keep reading a system message (System Information, SI), which leads to power consumption. In addition, frequent signaling increases a possibility of network congestion. A CN (Core Net, core network) needs to manage mobility of the UE in different standards. By managing an RA/LA//TA list (list), signaling generated by LAU/RAU/TAU is avoided as far as possible. For the CN, complexity of managing mobility areas RA/LA//TA of different standards is high, and planning is difficult.

In the another implementation scenario of the present invention, when movement of the UE leads to frequent change of the standard on which the UE camps, continual performing of location update is avoided. Location area update is performed only when the UE moves beyond a specific geographic area, which avoids continual reading of SI of cells of various standards, reduces power consumption of the UE, and in addition, reduces the possibility of network congestion caused by frequent signaling interaction, and reduces management complexity of the CN.

Optionally, as another embodiment, in step 201, the network-side device may configure, in an in-band manner, a unified broadcast control channel on a standard (for example, the GSM standard in the scenarios in FIG. 1-1 to FIG. 1-3) that has a widest coverage range in areas of different standards, or may configure a unified broadcast control channel in an out-of-band manner (outside any standard), that is, assign a separate segment of spectrum resources to serve as a unified broadcast control channel. It should be understood that this embodiment of the present invention sets no limitation thereto.

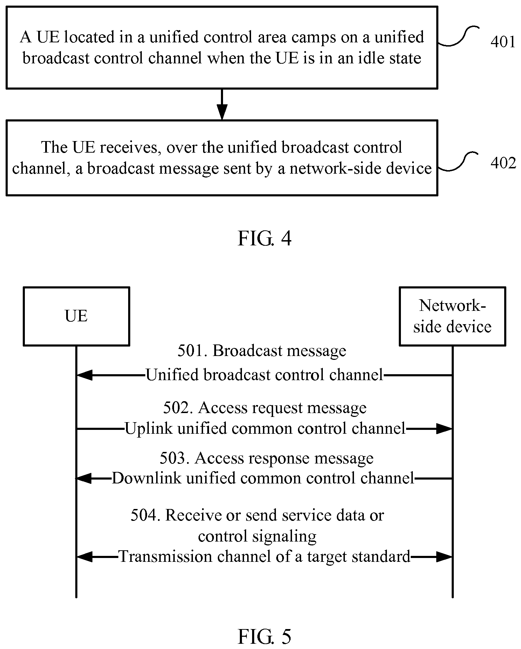

FIG. 4 is a flowchart of a radio communications method according to another embodiment of the present invention. The method is applicable to a radio communications system, where the radio communications system includes a unified control area, the unified control area includes areas covered by two or more cells of different standards, and the unified control area is configured with a unified broadcast control channel. The method in FIG. 4 is performed by a UE (such as a UE 105 in FIG. 1), and is corresponding to the method in FIG. 2. Therefore, description that is the same as that of the embodiment in FIG. 2 is properly omitted.

401. A UE located in a unified control area camps on a unified broadcast control channel when the UE is in an idle state.

The UE is located in the unified control area.

402. The UE receives, over the unified broadcast control channel, a broadcast message sent by a network-side device.

In this embodiment of the present invention, the UE camps on the unified broadcast control channel when the UE is in an idle state, and receives, over the unified broadcast control channel, the broadcast message sent by the network-side device, that is, when the UE is in an idle state, the UE camps on the unified broadcast control channel to intercept the broadcast message, so that in a process in which the UE moves in coverage areas, in the unified control area, of different standards, a standard on which the UE camps does not need to be changed, thereby reducing signaling overheads and reducing power consumption of the UE.

Optionally, the broadcast message includes an area identifier of the unified control area, and the method further includes: identifying, by the UE according to the area identifier of the unified control area, an area in which the UE is located; and/or
the broadcast message includes information of a unified location area, and the method further includes: performing, by the UE, location update determining according to the information of the unified location area; and/or
the broadcast message includes configuration information of at least one standard in the unified control area, and the method further includes: measuring, by the UE according to the configuration information of the at least one standard, a signal of the at least one standard to obtain a measurement result; and/or
the broadcast message includes configuration information of a common control channel of at least one standard in the unified control area, and the method further includes: selecting, by the UE, a common control channel of one standard from the common control channel of the at least one standard according to the configuration information of the common control channel of the at least one standard, and initiating an air interface connection establishment procedure over the selected common control channel of the one standard.

Location update may include LAU update, RAU update, TAU update, or the like. An example of location update performed by the UE is described above, and is not described herein again. When movement of the UE leads to frequent change of the standard on which the UE camps, registration or location update is not performed continually. Registration or location area update is performed only when the UE moves beyond a specific unified area. Therefore, continual reading of SI of cells of various standards is avoided, thereby reducing power consumption of the UE, reducing a possibility of network congestion caused by frequent signaling interaction, and reducing management complexity of a CN. In addition, configuration information of a cell of each standard in cells of different standards includes mobility-related parameters such as a cell reselection priority and reselection threshold, which are broadcast to UEs located in the cells of different standards over a unified broadcast control channel, thereby avoiding repeated delivery of same configuration information, improving efficiency of system message broadcasting, reducing a delay, avoiding a need to coordinate the mobility-related parameters of the cells of different standards, and reducing complexity of mobility management.

Optionally, in an implementation scenario, when the network-side device configures a unified common control channel for the unified control area, the method may further include:
403. The UE receives configuration information, sent by the network-side device, of a unified common control channel.

When the broadcast message includes the configuration information of the unified common control channel, the receiving, by the UE, configuration information, sent by the network-side device, of a unified common control channel includes:
acquiring, by the UE, the configuration information of the unified common control channel from the received broadcast message.

404. The UE receives or sends a message over the unified common control channel according to the configuration information.

The message may be an access request message, an access response message, or a paging message, which is not limited herein.

Specifically, UEs located in areas of different standards send an access request message to the network-side device over the unified common control channel, or receive an access response message sent by the network-side device, or receive related parameter information such as a paging message sent by the network-side device.

The unified common control channel may include an uplink unified common control channel and/or a downlink unified common control channel, and may be specifically a physical channel, a transmission channel, a logical channel, or the like, for example, a Uni-RACH channel in the uplink unified common control channel, or a Uni-AGCH channel or a Uni-PCH channel, which responds to a Uni-RACH channel, in the downlink common control channel.

Optionally, in a first implementation manner of the foregoing implementation scenario, when the unified common control channel includes a downlink unified common control channel, after step 403, the foregoing method may further include:
receiving, by the UE over the downlink unified common control channel, a paging message sent by the network-side device.

Optionally, in a second implementation manner of the foregoing implementation scenario, when the unified common control channel includes a downlink unified common control channel and an uplink unified common control channel, after step 403, the foregoing method may further include:
sending, by the UE, an access request message to the network-side device over the uplink unified common control channel; and
receiving, by the UE over the downlink unified common control channel, an access response message sent by the network-side device according to the access request message.

Optionally, the UE receives, over the downlink unified common control channel, information, sent by the network-side device, of a transmission channel assigned to the UE in a target standard; the UE accesses the transmission channel of the target standard according to the information of the transmission channel of the target standard, and receives or sends service data or control signaling over the transmission channel of the target standard.

The target standard is any one of the different standards; the information of the transmission channel may include configuration parameters of a corresponding logical channel, transmission channel, and/or physical channel.

Optionally, when the broadcast message includes the configuration information of the at least one standard in the unified control area, the access request message carries the measurement result of the at least one standard, and the measurement result of the at least one standard is used by the network-side device to select one standard from the at least one standard as the target standard.

Optionally, in the first implementation manner, the paging message may carry configuration information of a CCCH channel of the target standard, and the UE may initiate an air interface connection establishment procedure over the CCCH channel of the target standard according to the configuration information of the CCCH channel of the target standard; or when the broadcast message includes the configuration information of the common control channel of the at least one standard in the unified control area and configuration information of a common control channel of the target standard exists in the configuration information of the common control channel of the at least one standard, the paging message may carry indication information of a CCCH channel, and the UE acquires the configuration information of the CCCH channel of the target standard from the configuration information of the at least one standard according to the indication information, and initiates an air interface connection establishment procedure over the CCCH channel of the target standard according to the configuration information of the CCCH channel of the target standard.

In the second implementation manner, the access response message may carry configuration information of a CCCH channel of the target standard, and the UE initiates an air interface connection establishment procedure over the CCCH channel of the target standard according to the configuration information of the CCCH channel of the target standard; or when the broadcast message includes the configuration information of the common control channel of the at least one standard in the unified control area and configuration information of a common control channel of the target standard exists in the configuration information of the common control channel of the at least one standard, the access response message may carry indication information of a CCCH channel, and the UE may acquire the configuration information of the CCCH channel of the target standard from the configuration information of the at least one standard according to the indication information of the CCCH channel, and initiate an air interface connection establishment procedure over the CCCH channel of the target standard according to the configuration information of the CCCH channel of the target standard.

In the foregoing implementation scenario of this embodiment of the present invention, a UE in an idle state camps on a unified broadcast control channel, and receives a broadcast message over the unified broadcast control channel, so that in a process in which the UE moves in areas, in a unified control area, of different standards, a standard on which the UE camps does not need to be changed, thereby reducing signaling overheads and reducing power consumption of the UE. In addition, a complex processing procedure, in which the UE establishes a transmission channel in other standards except a target standard and then enters an area of the target standard in a manner such as handover, is avoided. Instead, a transmission channel of the target standard is established over a common control channel, so as to implement fast offloading across standards, meet a service requirement, and reduce a delay.

FIG. 5 is a schematic flowchart of a process of a radio communications method according to an embodiment of the present invention.

501. A network-side device sends a broadcast message to a UE over a unified broadcast control channel.

For descriptions related to the broadcast message and the unified broadcast control channel, refer to the embodiment shown in FIG. 2.

The unified broadcast control channel is configured in a unified control area, the unified control area includes areas covered by two or more cells of different standards, and the unified control area is configured with the unified broadcast control channel.

It should be noted that the broadcast message includes configuration information of a unified common control channel, and the unified common control channel includes a downlink unified common control channel and an uplink unified common control channel.

The configuration information (such as frequency, bandwidth, and synchronization information) of the unified common control channel may be included in the broadcast message, and the UE obtains the configuration information by using the broadcast message. It should be understood that this embodiment of the present invention sets no limitation thereto. The network-side device may send the configuration information of the configured unified common control channel to the UE in other manners.

502. The UE sends an access request message to the network-side device over an uplink unified common control channel.

Specifically, the UE may send the access request message to the network-side device over a corresponding uplink unified common control channel (such as a Uni-RACH channel). One or more UEs located in the unified control area may use a same Uni-RACH channel.

Optionally, when the broadcast message includes configuration information of at least one standard in the unified control area, the UE may measure, according to the configuration information of the at least one standard, a signal of the at least one standard, and add a measurement result to the access request message.

503. The network-side device sends an access response message to the UE over a downlink unified common control channel.

The access response message carries information of a transmission channel that is of a target standard and assigned to the UE.

Optionally, the UE may receive, in the broadcast message in step 501, configuration information (such as frequency, bandwidth, and synchronization information) of the downlink unified common control channel, and receive, over the corresponding downlink unified common control channel (such as a Uni-AGCH channel), the access response message sent by the network-side device.

Step 503 may specifically include:
determining a target standard, and assigning a transmission channel to the UE in the target standard, where the target standard is one of the different standards in the unified control area; and
adding information of the transmission channel to the access response message, and sending the access response message to the UE over the downlink unified common control channel.

For example, according to a situation (such as a service requirement, or running conditions, in the measurement result, of areas of all standards) of a standard supported by an accessed UE, or a requirement (such as bandwidth and a delay) of a service initiated by the UE, or running conditions (such as load) of areas of all standards, or signal quality of areas of all standards, or the like, the network-side device may determine a standard on which a subsequent service is performed, and assign a transmission channel of the target standard to the UE, so that the UE can be quickly handed over to an area of this standard, thereby implementing fast offloading across standards, meeting a service requirement, and reducing a delay.

For example, the accessed UE supports the LTE standard, and the network-side device determines that the target standard is LTE, and therefore, information of an LTE traffic channel (such as a DTCH/CTCH channel and a DCCH channel) is sent over the downlink unified common control channel.

504. The UE acquires information of a transmission channel of a target standard, and receives or sends service data or control signaling over the transmission channel of the target standard.

For example, the UE may send uplink data (Uplink data) to the network-side device over an LTE-DTCH channel; or the network-side device may send downlink data (Downlink data) to the UE over an LTE-DTCH channel, and so on.

By using the foregoing solution, UEs located in areas of different standards can receive a broadcast message over a unified broadcast control channel, and communicate with a network-side device over a unified common control channel to obtain information of a transmission channel of a target standard, thereby implementing fast offloading for the UEs by the network-side device and effectively reducing an access delay in addition to meeting a service requirement.

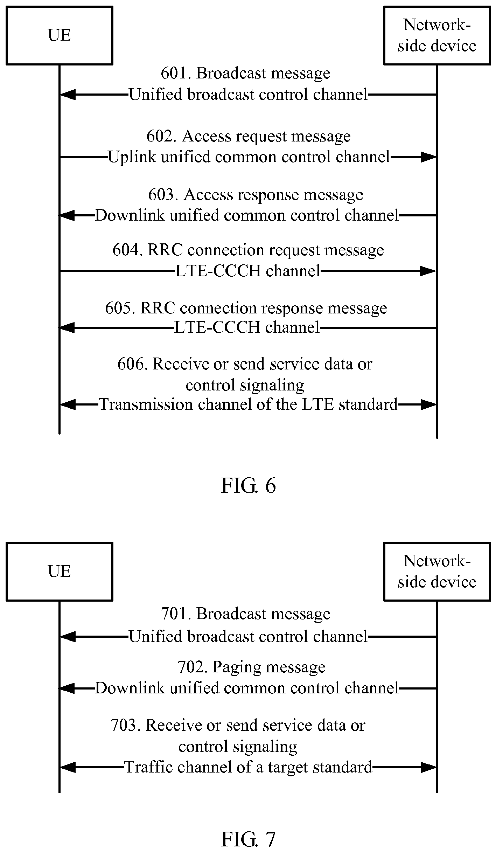

FIG. 6 is a schematic flowchart of a process of a radio communications method according to another embodiment of the present invention.

601. A network-side device sends a broadcast message to a UE over a unified broadcast control channel.

602. The UE sends an access request message to the network-side device over an uplink unified common control channel.

For descriptions related to steps 601 to 602, refer to the embodiment shown in FIG. 5, and details are not described herein again.

603. The network-side device sends an access response message to the UE over a downlink unified common control channel.

The access response message may carry configuration information of a common control channel of a target standard; or when the broadcast message in step 601 includes configuration information of a common control channel of at least one standard in a unified control area and configuration information of a common control channel of a target standard exists in the configuration information of the common control channel of the at least one standard, the access response message may carry indication information of a common control channel, where the indication information is used by the UE to acquire the configuration information of the common control channel of the target standard from the configuration information of the at least one standard in the unified control area according to the indication information of the common control channel.

Optionally, the network-side device may determine a target standard, that is, determine a standard on which a subsequent service is performed, among different standards in the unified control area according to a situation (such as a service requirement, or running conditions, in a measurement result, of areas of different standards) of a standard supported by the UE.

In the following, LTE is used as an example of the target standard for description. The access response message carries configuration information of an LTE-CCCH channel; or when the broadcast message in step 601 includes configuration information of an LTE-CCCH channel, the access response message carries indication information of the LTE-CCCH channel.

604. The UE acquires configuration information of an LTE-CCCH, and sends an RRC connection request message to the network-side device over the LTE-CCCH channel.

Optionally, when the access response message carries the configuration information of the LTE-CCCH, the UE acquires the configuration information of the LTE-CCCH channel from the access response message, and initiates an air interface connection establishment procedure over the LTE-CCCH channel. For example, the UE sends the RRC connection request message over the LTE-CCCH channel.

Optionally, when the access response message carries indication information of a common control channel, the UE may acquire the configuration information of the LTE-CCCH from the broadcast message according to the indication information of the common control channel. Specifically, if the broadcast message received by the UE in step 601 includes configuration information of CCCH channels of multiple standards (including the LTE standard), the configuration information of the LTE-CCCH channel may be acquired by using the indication information of the common control channel as an index, and an air interface connection establishment procedure is initiated over the LTE-CCCH.

605. The network-side device sends an RRC connection response message to the UE over the LTE-CCCH.

The RRC connection response message carries information of a transmission channel (such as a DTCH/CTCH channel and a DCCH channel) in an LTE network.

606. The UE acquires information of an LTE transmission channel, and receives or sends service data or control signaling over the LTE transmission channel.

By using the foregoing solution, when a UE initiates a service, due to a difference in requirements (such as bandwidth and a delay) of the service, running conditions (such as load) of areas of all standards are different, or signal quality of areas of all standards is different. A network-side device may select a proper area for the UE to perform the service, and quickly hand over the UE to an area of this standard. For example, the UE does not need to establish a traffic channel in other standards than a target standard and then enter an area of the target standard in a manner such as handover. Instead, the UE directly establishes a traffic channel of the target standard over a common control channel, thereby implementing fast offloading across standards, meeting a service requirement, and reducing a delay.

FIG. 7 is a schematic flowchart of a process of a radio communications method according to still another embodiment of the present invention.

701. A network-side device sends a broadcast message to a UE over a unified broadcast control channel.

For descriptions related to the broadcast message and the unified broadcast control channel, refer to the embodiment shown in FIG. 2.

The unified broadcast control channel is configured in a unified control area, the unified control area includes areas covered by two or more cells of different standards, and the unified control area is configured with the unified broadcast control channel.

The broadcast message carries configuration information of a unified common control channel, and the unified common control channel includes a downlink unified common control channel and an uplink unified common control channel.

The configuration information (such as frequency, bandwidth, and synchronization information) of the unified common control channel may be included in the broadcast message, and the UE obtains the configuration information by using the broadcast message. It should be understood that this embodiment of the present invention sets no limitation thereto. The network-side device may send the configured configuration information of the unified common control channel to the UE in other manners.

702. The network-side device sends a paging message to the UE over a downlink unified common control channel.

The paging message carries information of a transmission channel that is of a target standard and assigned to the UE. Specifically, the UE may receive, over a corresponding downlink unified common control channel (such as a Uni-PCH channel), the paging message sent by the network-side device. One or more UEs located in the unified control area may use a same Uni-PCH channel.

Step 702 may specifically include:
determining a target standard, and acquiring information of a transmission channel that is of the target standard and assigned to the UE in the target standard, where the target standard is one of the different standards in the unified control area; and
adding the information of the transmission channel of the target standard to the paging message, and sending the paging message to the UE over the downlink unified common control channel.

For example, according to a situation (such as a service requirement, or running conditions, in a measurement result, of areas of all standards) of a standard supported by an accessed UE, or a requirement (such as bandwidth and a delay) of a service triggered by the UE, or running conditions (such as load) of areas of all standards, or signal quality of areas of all standards, or the like, the network-side device may determine a standard on which a subsequent service is performed, and assign a transmission channel of the target standard to the UE, so that the UE can be quickly handed over to an area of this standard, thereby implementing fast offloading across standards, meeting a service requirement, and reducing a delay.

703. The UE acquires information of a transmission channel of a target standard, and receives or sends service data or control signaling over the transmission channel of the target standard.

For example, the UE may send uplink data (Uplink data) to the network-side device over an LTE-DTCH channel; or the network-side device may send downlink data (Downlink data) to the UE over an LTE-DTCH channel, and so on.

By using the foregoing solution, UEs located in areas of different standards can receive a broadcast message over a unified broadcast control channel, and communicate with a network-side device over a unified common control channel to obtain information of a transmission channel of a target standard, thereby implementing fast offloading for the UEs by the network-side device and effectively reducing an access delay in addition to meeting a service requirement.

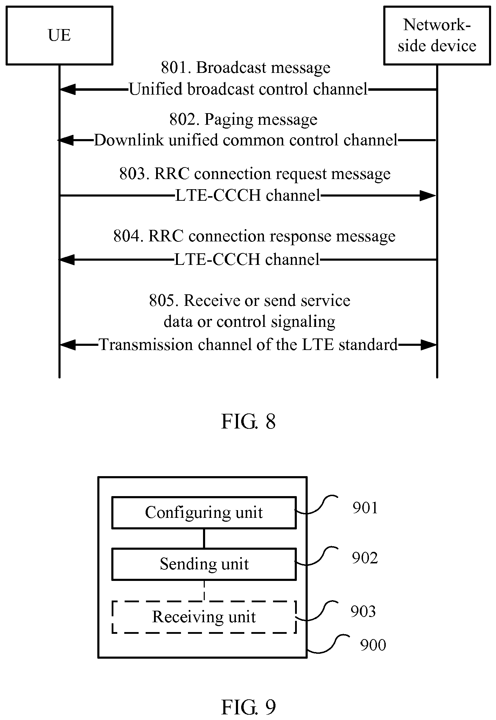

FIG. 8 is a schematic flowchart of a process of a radio communications method according to still another embodiment of the present invention.

801. A network-side device sends a broadcast message to a UE over a unified broadcast control channel.

For descriptions related to step 801, refer to the embodiment shown in FIG. 7, and details are not described herein again.

802. The network-side device sends a paging message to the UE over a downlink unified common control channel.

The paging message may include configuration information of a common control channel that is of a target standard and assigned to the UE; or when the broadcast message in step 801 includes configuration information of a common control channel of at least one standard in a unified control area and configuration information of a common control channel of a target standard exists in the configuration information of the common control channel of the at least one standard, the paging message may include indication information of a common control channel, so that the UE acquires the configuration information of the common control channel of the target standard from the configuration information of the at least one standard according to the indication information of the common control channel and initiates an air interface connection establishment procedure over the common control channel of the target standard.

Optionally, the network-side device may determine a target standard, that is, determine a standard on which a subsequent service is performed, among different standards in the unified control area according to a situation (such as a service requirement, or running conditions of areas of all standards) of a standard supported by the UE, for example, determine that the target standard is the LTE standard.

The following steps 803-805 are all described by using the LTE standard as an example of the target standard.

803. The UE acquires configuration information of an LTE-CCCH, and sends an RRC connection request message to the network-side device over the LTE-CCCH channel.

Specifically, when the paging message sent by the network-side device includes indication information of a CCCH channel, the configuration information of the LTE-CCCH may be acquired according to the indication information of the CCCH channel from the configuration information, included in the broadcast message, of the common control channel of the at least one standard. For example, the configuration information of the LTE-CCCH channel may be acquired by using the indication information as an index.

Alternatively, when the paging message includes the configuration information of the LTE-CCCH, the configuration information of the LTE-CCCH may be directly acquired.

804. The network-side device sends an RRC connection response message to the UE over the LTE-CCCH channel.

The RRC connection response message carries information of a transmission channel (such as a DTCH/CTCH channel and a DCCH channel) of the LTE standard.

805. The UE acquires information of a transmission channel of the LTE standard, and receives or sends service data or control signaling over the transmission channel of the LTE standard.

By using the foregoing solution, when a UE triggers a service, due to difference in requirements (such as bandwidth and a delay) of the service, running conditions (such as load) of areas of all standards are different, or signal quality of areas of all standards is different. A network-side device may select a proper area for the UE to perform the service, and quickly hand over the UE to an area of this standard. For example, the UE does not need to establish a traffic channel in other standards than a target standard and then enter an area of the target standard in a manner such as handover. Instead, the UE directly establishes a traffic channel of the target standard over a common control channel, thereby implementing fast offloading across standards, meeting a service requirement, and reducing a delay.

FIG. 9 is a structural block diagram of a network-side device according to an embodiment of the present invention. The network-side device may be an SRC. The network-side device 900 includes a configuring unit 901 and a sending unit 902.

The configuring unit 901 is configured to configure a unified broadcast control channel for a unified control area, where the unified control area includes areas covered by two or more cells of different standards.

The sending unit 902 is configured to send, over the unified broadcast control channel configured by the configuring unit 901, a broadcast message to an idle-state user equipments UE that is located in the unified control area and camps on the unified broadcast control channel.

In the foregoing implementation scenario of this embodiment of the present invention, a broadcast message is sent over the unified broadcast control channel, which avoids that, broadcast control channels of respective standards are configured for areas of different standards, thereby avoiding that a same broadcast message is repeatedly transmitted in coverage areas of different standards, and effectively reducing signaling overheads. In addition, the network-side device configures a unified common control channel, so that the UE can quickly access a network and implement fast offloading across standards, thereby meeting a service requirement and reducing a delay.

The network-side device 900 can implement operations related to the network-side device in the embodiments in FIG. 2 to FIG. 8. Therefore, to avoid repetition, details are not described herein again.

The broadcast message may include one or more types of the following information:
an area identifier of the unified control area, where the area identifier of the unified control area is used to instruct the UE to identify an area in which the UE is located;
configuration information of at least one standard, where the configuration information of the at least one standard is used by a UE located in an area of the at least one standard, to measure a carrier frequency in the area of the at least one standard to obtain a measurement result (for example, LTE or GSM or UMTS in the scenarios in FIG. 1 to FIG. 3);
information of a unified location area, where the information of the unified location area is used by the UE located in the unified control area, to perform location update determining; and
configuration information of a common control channel of at least one standard, where the configuration information of the common control channel of the at least one standard is used by the UE to select a common control channel of one standard from the common control channel of the at least one standard and initiate an air interface connection establishment procedure over the selected one common control channel.

Further, the broadcast message may include configuration information of an area of each standard in areas of different standards.

Location update may include LAU update, RAU update, TAU update, or the like. When movement of the UE leads to frequent change of a standard on which the UE camps, area update is not performed continually. Location area update is performed only when the UE moves beyond a specific geographic area. Therefore, continual reading of SI of cells of various standards is avoided, power consumption of the UE is reduced, a possibility of network congestion caused by frequent signaling interaction is reduced, and management complexity of a CN is reduced. In addition, configuration information of a cell of each standard in cells of different standards includes mobility-related parameters such as a cell reselection priority and reselection threshold, which are broadcast to UEs in the cells of different standards over a unified broadcast control channel, thereby avoiding repeated delivery of same configuration information, improving efficiency of system message broadcasting, reducing a delay, avoiding a need to coordinate the mobility-related parameters of the cells of different standards, and reducing complexity of mobility management.

Optionally, in an implementation scenario, details are as follows:
The configuring unit 901 may be further configured to configure a unified common control channel (Uni-CCCH) for the unified control area.

The sending unit 902 may be further configured to send configuration information of the unified common control channel to the UE, where the configuration information of the unified common control channel is used for the UE receiving or sending a message over the unified common control channel.

The message may be an access request message, an access response message, or a paging message, which is not limited herein.

Optionally, the sending unit 902 is further configured to send the configuration information of the unified common control channel to the UE by using adding the configuration information of the unified common control channel to the broadcast message.

Optionally, the unified common control channel may include an uplink unified common control channel and/or a downlink unified common control channel, and may be specifically a physical channel, a transmission channel, a logical channel, or the like, for example, a Uni-RACH channel in the uplink unified common control channel, or a Uni-AGCH channel or a Uni-PCH channel, which responds to a Uni-RACH channel, in the downlink common control channel.

Optionally, when the unified common control channel includes a downlink unified common control channel and an uplink unified common control channel, the network-side device may further include a receiving unit 903.

The receiving unit 903 is configured to receive, over the uplink unified common control channel, an access request message sent by the UE.

The sending unit 902 may be further configured to send an access response message to the UE over the downlink unified common control channel according to the access request message received by the receiving unit 903.

Optionally, the sending unit 902 is further configured to:
select one standard from the different standards in the unified control area as a target standard;
acquire information of a transmission channel assigned to the UE in the target standard; and
send the information of the transmission channel of the target standard to the UE over the downlink unified common control channel.

The information of the transmission channel of the target standard is used by the UE to access the transmission channel of the target standard and perform transmission of service data or control signaling over the transmission channel of the target standard.

Optionally, when the broadcast message includes the configuration information of the at least one standard in the unified control area, the access request message carries the measurement result of the at least one standard, and the configuring unit 901 is further configured to select one standard from the at least one standard as a target standard according to the measurement result of the at least one standard.

Optionally, the access response message may carry configuration information of a CCCH channel of a target standard; or when the broadcast message includes the configuration information of the CCCH channel of the at least one standard in the unified control area and configuration information of a common control channel of a target standard exists in the configuration information of the common control channel of the at least one standard, the access response message may carry indication information of a CCCH channel.

The target standard is any one of the different standards; the indication information of the CCCH channel is used to instruct the UE to acquire the configuration information of the common control channel of the target standard from the configuration information of the CCCH channel of the at least one standard, and initiate an air interface connection establishment procedure over the common control channel of the target standard.

Optionally, when the unified common control channel includes a downlink unified common control channel, the sending unit 902 may be further configured to:
send a paging message to the UE over the downlink unified common control channel.

Optionally, the sending unit 902 may be further configured to send information of a transmission channel of the target standard to the UE over the downlink unified common control channel, where the information of the transmission channel of the target standard is used to instruct the UE to receive or send service data or control signaling over the transmission channel of the target standard, where the target standard is any one of the different standards.

The information of the transmission channel of the target standard may be carried in the paging message or the access response message.

Optionally, the paging message may carry configuration information of a CCCH channel of the target standard; or when the broadcast message includes the configuration information of the CCCH channel of the at least one standard in the unified control area and configuration information of a common control channel of the target standard exists in the configuration information of the common control channel of the at least one standard, the paging message may carry indication information of a CCCH channel, and the indication information of the CCCH channel is used by the UE to acquire the configuration information of the CCCH channel of the target standard from the configuration information of the CCCH channel of the at least one standard and initiate an air interface connection establishment procedure over the common control channel of the target standard.

In the foregoing implementation scenario of this embodiment of the present invention, a network-side device configures a unified broadcast control channel for a unified control area, and sends a broadcast message over the unified broadcast control channel, so that a UE in an idle state camps on the unified broadcast control channel to intercept the broadcast message. Therefore, in a process in which the UE moves in coverage areas, in the unified control area, of different standards, a standard on which the UE camps does not need to be changed, thereby reducing complexity of radio resource coordination and management, reducing signaling overheads, and reducing power consumption of the UE. In addition, the network-side device configures a unified common control channel, so that the UE can quickly access a network and implement fast offloading across standards, thereby meeting a service requirement and reducing a delay.

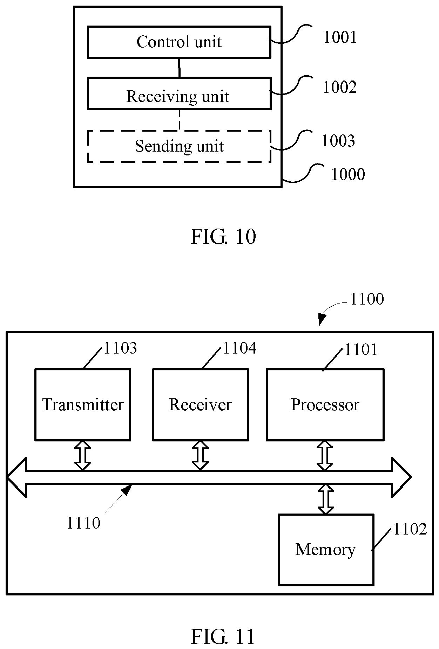

FIG. 10 is a structural block diagram of a user equipment according to an embodiment of the present invention. The UE is located in a unified control area, the unified control area includes areas covered by two or more cells of different standards, the unified control area is configured with a unified broadcast control channel, and the user equipment 1000 includes a control unit 1001 and a receiving unit 1002.

The control unit 1001 is configured to control, when the UE is in an idle state, the user equipment 1000 to camp on the unified broadcast control channel of the unified control area.

The receiving unit 1002 is configured to receive, over the unified broadcast control channel on which the user equipment camps under control of the control unit 1001, a broadcast message sent by a network-side device.

The UE is located in the unified control area.

In this embodiment of the present invention, the UE camps on a unified broadcast control channel when the UE is in an idle state, and receives, over the unified broadcast control channel, a broadcast message sent by a network-side device, that is, when the UE is in an idle state, the UE camps on the unified broadcast control channel to intercept the broadcast message, so that in a process in which the UE moves in coverage areas, in the unified control area, of different standards, a standard on which the UE camps does not need to be changed, thereby reducing signaling overheads and reducing power consumption of the UE.

The user equipment 1000 can implement operations related to the user equipment in the embodiments in FIG. 2 to FIG. 8. Therefore, to avoid repetition, details are not described herein again.

Optionally, the broadcast message includes an area identifier of the unified control area, and the control unit 1001 may be further configured to identify, according to the area identifier of the unified control area, an area in which the UE is located.

Optionally, the broadcast message includes configuration information of at least one standard, and the control unit 1001 may be further configured to measure, according to the configuration information of the at least one standard, a carrier frequency in an area of the at least one standard to obtain a measurement result.

Optionally, the broadcast message may include information of a unified location area, and the control unit 1001 may be further configured to perform location update determining according to the information of the unified location area. Location update may include LAU update, RAU update, TAU update, or the like. When movement of the UE leads to frequent change of a standard on which the UE camps, area update is not performed continually. Location area update is performed only when the UE moves beyond a specific geographic area. Therefore, continual reading of SI of cells of various standards is avoided, power consumption of the UE is reduced, a possibility of network congestion caused by frequent signaling interaction is reduced, and management complexity of a CN is reduced. In addition, configuration information of a cell of each standard in cells of different standards includes mobility-related parameters such as a cell reselection priority and reselection threshold, which are broadcast to UEs in the cells of different standards over a unified broadcast control channel, thereby avoiding repeated delivery of same configuration information, improving efficiency of system message broadcasting, reducing a delay, avoiding a need to coordinate the mobility-related parameters of the cells of different standards, and reducing complexity of mobility management.

Optionally, the broadcast message includes configuration information of a common control channel of at least one standard, and the control unit 1001 may be further configured to: select a common control channel of one standard from the common control channel of the at least one standard according to the configuration information of the common control channel of the at least one standard, and initiate an air interface connection establishment procedure over the selected common control channel.

Optionally, in an implementation scenario, the receiving unit 1002 may be further configured to receive configuration information, sent by the network-side device, of the unified common control channel.

The control unit 1001 may be further configured to receive or send a message over the unified common control channel according to the configuration information of the unified common control channel.

The message may be an access request message, an access response message, or a paging message, which is not limited herein.

Optionally, when the broadcast message includes the configuration information of the unified common control channel, the receiving unit 1002 is further configured to acquire the configuration information of the unified common control channel from the broadcast message.

The unified common control channel may include a downlink unified common control channel and/or an uplink unified common control channel, and may be specifically a physical channel, a transmission channel, a logical channel, or the like, for example, a Uni-RACH channel in the uplink unified common control channel, or a Uni-AGCH channel or a Uni-PCH channel, which responds to a Uni-RACH channel, in the downlink common control channel.

Optionally, the unified common control channel includes a downlink unified common control channel, and the receiving unit 1002 may be further configured to receive a paging message over the unified common control channel.

Optionally, the unified common control channel includes a downlink unified common control channel and an uplink unified common control channel, and the user equipment 1000 further includes a sending unit 1003.

The sending unit 1003 is configured to send an access request message over the uplink unified common control channel.

The receiving unit 1002 may be further configured to receive, over the downlink unified common control channel, an access response message sent by the network-side device according to the access request message sent by the sending unit.

When the broadcast message includes the configuration information of the at least one standard in the unified control area, the access request message may carry the measurement result of the at least one standard, which may be used by the network-side device to select one standard from the at least one standard as a target standard.

Optionally, the receiving unit 1002 may be further configured to receive, over the downlink unified common control channel, information, sent by the network-side device, of a transmission channel of a target standard.

The control unit 1001 may be further configured to receive or send service data or control signaling over the transmission channel according to the information of the transmission channel of the target standard.

The target standard is any one of the different standards in the unified control area.

Optionally, in an implementation manner, when the paging message carries configuration information of a CCCH channel of a target standard, the control unit 1001 may be further configured to initiate an air interface connection establishment procedure over the CCCH channel of the target standard according to the configuration information of the CCCH channel of the target standard.

Alternatively, when the broadcast message includes the configuration information of the CCCH channel of the at least one standard in the unified control area and configuration information of a common control channel of a target standard exists in the configuration information of the common control channel of the at least one standard, if the paging message may carry indication information of a CCCH channel, the control unit 1001 may be further configured to: acquire the configuration information of the CCCH channel of the target standard from the configuration information of the CCCH channel of the at least one standard according to the indication information of the CCCH channel, and initiate an air interface connection establishment procedure over the CCCH channel of the target standard.

In another implementation manner, the access response message may carry configuration information of a CCCH channel of a target standard, and the control unit 1001 may be further configured to initiate an air interface connection establishment procedure over the CCCH channel of the target standard according to the configuration information of the CCCH channel of the target standard.

Alternatively, when the broadcast message further includes the configuration information of the CCCH channel of the at least one standard in the unified control area and configuration information of a common control channel of a target standard exists in the configuration information of the common control channel of the at least one standard, if the access response message carry indication information of a CCCH channel, the control unit 1001 may be further configured to: acquire the configuration information of the CCCH channel of the target standard from the configuration information of the CCCH channel of at least one standard according to the indication information, and initiate an air interface connection establishment procedure over the CCCH channel of the target standard.

In the foregoing implementation scenario of this embodiment of the present invention, a UE in an idle state camps on a unified broadcast control channel, and receives a broadcast message over the unified broadcast control channel, so that in a process in which the UE moves in areas, in a unified control area, of different standards, a standard on which the UE camps does not need to be changed, thereby reducing signaling overheads and reducing power consumption of the UE. In addition, a complex processing procedure, in which the UE establishes a transmission channel in other standards except a target standard and then enters an area of the target standard in a manner such as handover, is avoided. Instead, a transmission channel of the target standard is established over a common control channel, so as to implement fast offloading across standards, meet a service requirement, and reduce a delay.

This embodiment of the present invention further gives an apparatus embodiment for implementing each step and the method in the foregoing method embodiments. FIG. 11 is a schematic block diagram of a device according to an embodiment of the present invention. In this embodiment, the device 1100 includes a processor 1101, a memory 1102, a transmitter 1103, and a receiver 1104. The processor 1101 controls an operation of the device 1100, and the processor 1101 may also be called a CPU (Central Processing Unit, central processing unit). The memory 1102 may include a read-only memory and a random access memory, and provides an instruction and data to the processor 1101. Apart of the memory 1102 may further include a non-volatile random access memory (NVRAM). The processor 1101, the memory 1102, the transmitter 1103, and the receiver 1104 are coupled together by using a bus system 1110, where in addition to a data bus, the bus system 1110 includes a power bus, a control bus, and a state signal bus. However, for clarity, various types of buses in the figure are marked as the bus system 1110.

The method disclosed in this embodiment of the present invention may apply to the device 1100. The processor 1101 may be an integrated circuit chip and exhibits signal processing capabilities. In an implementation process, the steps of the method may be implemented by an integrated logical circuit of hardware in the processor 1101, or by a software instruction. The processor 1101 may be a general processor, including a central processing unit (central processing unit, CPU), a network processor (network processor, NP), and the like, and may further be a digital signal processor (Digital Signal Processor, DSP), an application-specific integrated circuit (Application Specific Integrated Circuit, ASIC), a field programmable gate array (Field Programmable Gate Array, FPGA) or other programmable logical device, a discrete gate or transistor logical device, or a discrete hardware component. The processor may implement or execute the methods, steps and logical block diagrams disclosed in the embodiments of the present invention. The general purpose processor may be a microprocessor, or the processor may also be any conventional processor or the like.

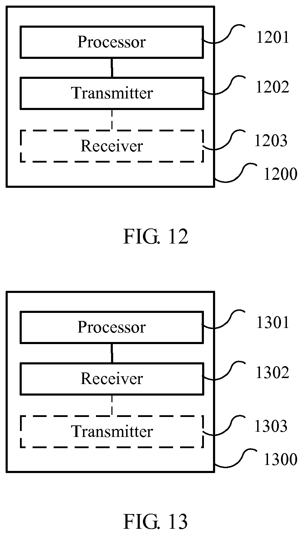

Further, FIG. 12 is a structural block diagram of a network-side device according to another embodiment of the present invention, where the network-side device may be specifically an SRC. The network-side device 1200 includes a processor 1201 and a transmitter 1202.

The processor 1201 is configured to configure a unified broadcast control channel for a unified control area, where the unified control area includes areas covered by two or more cells of different standards.

The transmitter 1202 is configured to send, over the unified broadcast control channel configured by the processor 1201, a broadcast message to a UE located in the unified control area.

In this embodiment of the present invention, a network-side device configures a unified broadcast control channel for a unified control area, and sends a broadcast message over the unified broadcast control channel, so that a UE in an idle state camps on the unified broadcast control channel to intercept the broadcast message. Therefore, in a process in which the UE moves in coverage areas, in the unified control area, of different standards, a standard on which the UE camps does not need to be changed, thereby reducing complexity of radio resource coordination and management, reducing signaling overheads, and reducing power consumption of the UE.

The network-side device 1200 can implement operations related to the network-side device in the embodiments in FIG. 2 to FIG. 8. Therefore, to avoid repetition, details are not described herein again.

Optionally, the broadcast message may include one or more types of the following information:
an area identifier of the unified control area, where the area identifier of the unified control area is used to instruct the UE, which is located in the unified control area, to identify the unified control area in which the UE is located;
configuration information of at least one standard, where the configuration information of the at least one standard is used to instruct a UE, which is located in an area of the at least one standard, to measure a carrier frequency in the area of the at least one standard to obtain a measurement result (for example, LTE, GSM, or UMTS in the scenarios in FIG. 1 to FIG. 3);
information of a unified location area, where the information of the unified location area is used to instruct the UE, which is located in the unified control area, to perform location update determining; and
configuration information of a common control channel of at least one standard, where the configuration information of the common control channel of the at least one standard is used by the UE to select a common control channel from the common control channel of the at least one standard and initiate an air interface connection establishment procedure over the selected common control channel.

Location update may include LAU update, RAU update, TAU update or the like. When movement of the UE leads to frequent change of a standard on which the UE camps, area update is not performed continually. Location area update is performed only when the UE moves beyond a specific geographic area. Therefore, continual reading of SI of cells of various standards is avoided, power consumption of the UE is reduced, a possibility of network congestion caused by frequent signaling interaction is reduced, and management complexity of a CN is reduced. In addition, configuration information of a cell of each standard in cells of different standards includes mobility-related parameters such as a cell reselection priority and reselection threshold, which are broadcast to the UEs in the cells of different standards over a unified broadcast control channel, thereby avoiding repeated delivery of same configuration information, improving efficiency of system message broadcasting, reducing a delay, avoiding a need to coordinate the mobility-related parameters of the cells of different standards, and reducing complexity of mobility management.

Further, the broadcast message may include configuration information of an area of each standard in areas of different standards.

Optionally, in an implementation scenario, the processor 1201 may be further configured to configure a unified common control channel (Uni-CCCH).

The transmitter 1202 may be further configured to send configuration information of the unified common control channel to the UE.

Optionally, the broadcast message sent by the transmitter 1202 over the unified broadcast control channel may include information of the unified common control channel configured by the processor 1201.

The information of the unified common control channel is used for the UE receiving or sending a message over the unified common control channel.

The message may be an access request message, an access response message, or a paging message, which is not limited herein.

Optionally, the unified common control channel may include an uplink unified common control channel and/or a downlink unified common control channel, and may be specifically a physical channel, a transmission channel, a logical channel, or the like, for example, a Uni-RACH channel in the uplink unified common control channel, or a Uni-AGCH channel or a Uni-PCH channel, which responds to a Uni-RACH channel, in the downlink common control channel.

Optionally, the network-side device may further include a receiver 1203. The receiver 1203 is configured to receive, over the uplink unified common control channel, an access request message sent by the UE located in the unified control area.

The transmitter 1202 may be further configured to send an access response message to the UE over the downlink unified common control channel according to the access request message received by the receiver 1203, where the UE is located in the unified control area.

Optionally, the processor 1201 is further configured to: select one standard from the different standards in the unified control area as a target standard, and acquire information of a transmission channel that is of the target standard and assigned to the UE in the target standard.

The transmitter 1202 is further configured to send the information of the transmission channel of the target standard to the UE over the downlink unified common control channel.

The information of the transmission channel of the target standard is used by the UE to access the transmission channel of the target standard and perform transmission of service data or control signaling over the transmission channel of the target standard.

When the broadcast message includes a configuration message of the at least one standard in the unified control area, the access request message may carry the measurement result of the at least one standard. Further, after the UE accesses a network, the processor 1201 may be further configured to select one standard from the at least one standard as the target standard according to the measurement result included in the access request message.

Optionally, the transmitter 1202 may be further configured to send a paging message to the UE over the downlink unified common control channel.

Optionally, the transmitter 1202 may be further configured to send the information of the transmission channel of the target standard to the UE over the downlink unified common control channel, where the information of the transmission channel of the target standard is used to instruct the UE to receive or send service data or control signaling over the transmission channel, where the target standard is any one of the different standards.

The information of the transmission channel of the target standard may be carried in the paging message or the access response message.

Optionally, in an implementation manner, the paging message may carry configuration information of a CCCH channel of a target standard; or when the broadcast message includes the configuration information of the common control channel of the at least one standard in the unified control area and configuration information of a common control channel of a target standard exists in the configuration information of the common control channel of the at least one standard, the paging message may carry indication information of a CCCH channel, and the indication information of the CCCH channel is used to instruct the UE to acquire the configuration information of the CCCH channel of the target standard from the configuration information of the common control channel of the at least one standard and initiate an air interface connection establishment procedure over the CCCH channel of the target standard.

In another implementation manner, the access response message may carry configuration information of a CCCH channel of a target standard; or when the broadcast message includes the configuration information of the common control channel of the at least one standard in the unified control area and configuration information of a common control channel of a target standard exists in the configuration information of the common control channel of the at least one standard, the access response message may carry indication information of a CCCH channel.

The indication information of the CCCH channel is used to instruct the UE to acquire the configuration information of the CCCH channel of the target standard from the configuration information of the common control channel of the at least one standard, and initiate an air interface connection establishment procedure over the CCCH channel of the target standard, where the target standard is any one of the different standards in the unified control area.

In the foregoing implementation scenario of this embodiment of the present invention, a network-side device configures a unified broadcast control channel for a unified control area, and sends a broadcast message over the unified broadcast control channel, so that a UE in an idle state camps on the unified broadcast control channel to intercept the broadcast message. Therefore, in a process in which the UE moves in coverage areas, in the unified control area, of different standards, a standard on which the UE camps does not need to be changed, thereby reducing complexity of radio resource coordination and management, reducing signaling overheads, and reducing power consumption of the UE. In addition, the network-side device configures a unified common control channel, so that the UE can quickly access a network and implement fast offloading across standards, thereby meeting a service requirement and reducing a delay.

FIG. 13 is a structural block diagram of a user equipment according to another embodiment of the present invention. The user equipment UE is located in a unified control area, the unified control area includes areas covered by two or more cells of different standards, the unified control area is configured with a unified broadcast control channel, and the user equipment 1300 includes a processor 1301 and a receiver 1302.

The processor 1301 is configured to control, when the processor 1301 is in an idle state, the user equipment 1300 to camp on the unified broadcast control channel of the unified control area.

The receiver 1302 is configured to receive, over the unified broadcast control channel on which the user equipment 1300 camps under control of the processor 1301, a broadcast message sent by a network-side device.

The UE is located in the unified control area, and the unified control area includes areas covered by two or more cells of different standards.

In this embodiment of the present invention, the UE camps on the unified broadcast control channel when the UE is in an idle state, and receives, over the unified broadcast control channel, the broadcast message sent by the network-side device, that is, when the UE is in an idle state, the UE camps on the unified broadcast control channel to intercept the broadcast message, so that in a process in which the UE moves in coverage areas, in the unified control area, of different standards, a standard on which the UE camps does not need to be changed, thereby reducing signaling overheads and reducing power consumption of the UE.

The user equipment 1300 can implement operations related to the user equipment in the embodiments in FIG. 2 to FIG. 8. Therefore, to avoid repetition, details are not described herein again.

Optionally, the broadcast message may include an area identifier of the unified control area, and the processor 1301 may be further configured to identify, according to the area identifier of the unified control area, that the UE is located in the unified control area.

Optionally, the broadcast message may include configuration information of at least one standard, and the processor 1301 may be further configured to measure, according to the configuration information of the at least one standard, a signal of the at least one standard to obtain a measurement result.

Optionally, the broadcast message may include information of a unified location area, and the processor 1301 may be further configured to perform location update determining according to the information of the unified location area. Location update may include LAU update, RAU update, TAU update, or the like. When movement of the UE leads to frequent change of the standard on which the UE camps, area update is not performed continually. Location area update is performed only when the UE moves beyond a specific geographic area. Therefore, continual reading of SI of cells of various standards is avoided, power consumption of the UE is reduced, a possibility of network congestion caused by frequent signaling interaction is reduced, and management complexity of a CN is reduced. In addition, configuration information of a cell of each standard in cells of different standards includes mobility-related parameters such as a cell reselection priority and reselection threshold, which are broadcast to UEs in the cells of different standards over a unified broadcast control channel, thereby avoiding repeated delivery of same configuration information, improving efficiency of system message broadcasting, reducing a delay, avoiding a need to coordinate the mobility-related parameters of the cells of different standards, and reducing complexity of mobility management.

Optionally, the broadcast message may include configuration information of a common control channel of at least one standard, and the processor 1301 may be further configured to: select a common control channel of one standard from the common control channel of the at least one standard according to the configuration information of the common control channel of the at least one standard and initiate an air interface connection establishment procedure over the selected common control channel of one standard.

Optionally, the receiver 1302 may be further configured to receive configuration information, sent by the network-side device, of a unified common control channel.

The processor 1301 may be further configured to receive or send a message over the unified common control channel according to the configuration information of the unified common control channel.

The message may be an access request message, an access response message, or a paging message, which is not limited herein. Further, when the broadcast message includes the configuration information of the unified common control channel, the receiver 1302 is further configured to:
acquire the configuration information of the unified common control channel from the broadcast message.

Specifically, the unified common control channel may include a downlink unified common control channel and/or an uplink unified common control channel, and may be specifically a physical channel, a transmission channel, a logical channel, or the like, for example, a Uni-RACH channel in the uplink unified common control channel, or a Uni-AGCH channel or a Uni-PCH channel, which responds to a Uni-RACH channel, in the downlink common control channel.

Optionally, when the unified common control channel includes a downlink unified common control channel, the receiver 1302 may be further configured to receive a paging message over the downlink unified common control channel.

Optionally, when the unified common control channel includes a downlink unified common control channel and an uplink unified common control channel, the user equipment 1300 further includes a transmitter 1303.

The transmitter 1303 is configured to send an access request message over the uplink unified common control channel.

The receiver 1302 may be further configured to receive an access response message over the downlink unified common control channel.

Optionally, the receiver 1302 may be further configured to receive, over the downlink unified common control channel, information, sent by the network-side device, of a transmission channel of a target standard.

The processor 1301 may be further configured to receive or send service data or control signaling over the transmission channel of the target standard according to the information of the transmission channel of the target standard, where the target standard is any one of the different standards.

The network-side device may send the information of the transmission channel of the target standard to the UE by adding the information of the transmission channel of the target standard to the paging message or the access response message.

Optionally, in an implementation manner, the paging message may carry configuration information of a CCCH channel of a target standard, and the processor 1301 may be further configured to initiate an air interface connection establishment procedure over the CCCH channel of the target standard according to the configuration information of the CCCH channel of the target standard.

Alternatively, when the broadcast message further includes the configuration information of the common control channel of the at least one standard in the unified control area and configuration information of a common control channel of a target standard exists in the configuration information of the common control channel of the at least one standard, the paging message may carry indication information of a CCCH channel, and the processor 1301 may be further configured to: acquire the configuration information of the CCCH channel of the target standard from the configuration information of the common control channel of the at least one standard according to the indication information, and initiate an air interface connection establishment procedure over the CCCH channel of the target standard according to the configuration information of the CCCH channel of the target standard.

In another implementation manner, the access response message may carry configuration information of a CCCH channel of a target standard, and the processor 1301 may be further configured to initiate an air interface connection establishment procedure over the CCCH channel of the target standard according to the configuration information of the CCCH channel of the target standard.

Alternatively, when the broadcast message further includes the configuration information of the common control channel of the at least one standard in the unified control area and configuration information of a common control channel of a target standard exists in the configuration information of the common control channel of the at least one standard, the processor 1301 may be further configured to acquire the configuration information of the CCCH channel of the target standard from the configuration information of the common control channel of the at least one standard according to the indication information, and the transmitter 1303 may be further configured to initiate an air interface connection establishment procedure over the CCCH channel of the target standard according to the configuration information of the CCCH channel of the target standard.

In the foregoing implementation scenario of this embodiment of the present invention, a UE in an idle state camps on a unified broadcast control channel, and receives a broadcast message over the unified broadcast control channel, so that in a process in which the UE moves in areas of different standards in a unified control area, a standard on which the UE camps does not need to be changed, thereby reducing signaling overheads and reducing power consumption of the UE. In addition, a complex processing process, in which the UE establishes a transmission channel in other standards except a target standard and then enters an area of the target standard in a manner such as handover, is avoided. Instead, a transmission channel of the target standard is established over a common control channel, so as to implement fast offloading across standards, meet a service requirement, and reduce a delay.

A person of ordinary skill in the art may be aware that, the units and algorithm steps described with reference to the examples in the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A cellular communication method, the method being applicable to a cellular communication system, wherein the cellular communication system comprises a unified control area, the unified control area comprises areas covered by two or more cells of different standards, the method comprising:
configuring (201), by a network-side device, a unified broadcast control channel for the unified control area; and sending (202), by the network-side device, a broadcast message over the unified broadcast control channel to a user equipment, UE located in the unified control area, whereby the UE camps on the unified broadcast control channel when in idle-state; wherein the broadcast message comprises configuration information of at least one standard in the unified control area, wherein the configuration information of the at least one standard is used for the UE measuring a signal of the at least one standard to obtain a measurement result;
configuring, by the network-side device, a unified common control channel for the unified control area; and sending, by the network-side device, configuration information of the unified common control channel to the UE, wherein the configuration information of the unified common control channel is used for the UE receiving or sending a message over the unified common control channel; and
selecting, by the network-side device, a target standard from the different standards based at least on the measurement result corresponding to the at least one standard; and sending, by the network-side device, the information of the target standard to the UE over the unified common control channel; wherein the information of the target standard is used by the UE to access a transmission channel of the target standard and perform a transmission of service data or control signaling over the transmission channel of the target standard.

2. The method according to claim 1, wherein the network-side device is a single radio controller, SRC, and the SRC is configured to manage radio resources of the different standards in the unified control area.

3. The method according to any one of claims 1 or 2, wherein the broadcast message comprises one or more types of the following information:
an area identifier of the unified control area, wherein the area identifier of the unified control area is used by the UE to identify an area in which the UE is located;
information of a unified location area, wherein the information of the unified location area is used for the UE performing location update determining; and
configuration information of a common control channel of at least one standard in the unified control area, wherein the configuration information of the common control channel of the at least one standard is used for the UE selecting a common control channel of one standard from the common control channel of the at least one standard and initiating an air interface connection establishment procedure over the selected common control channel.

4. The method according to any one of claims 1 to 3, wherein the unified common control channel comprises a downlink unified common control channel, and the method further comprises:
sending (702), by the network-side device, a paging message to the UE over the downlink unified common control channel.

5. The method according to any one of claims 1 to 3, wherein the unified common control channel comprises a downlink unified common control channel and an uplink unified common control channel, and the method further comprises:
receiving (502), by the network-side device and over the uplink unified common control channel, an access request message sent by the UE; and
sending (503), by the network-side device, an access response message to the UE over the downlink unified common control channel according to the access request message.

6. A network-side device (900), comprising:
a configuring unit (901), configured to configure a unified broadcast control channel for a unified control area, wherein the unified control area comprises areas covered by two or more cells of different standards; and
a sending unit (902), configured to send, over the unified broadcast control channel configured by the configuring unit, a broadcast message to a user equipment, UE, that is located in the unified control area, wherein the UE camps on the unified broadcast control channel when in idle-state; wherein the broadcast message comprises configuration information of at least one standard in the unified control area, wherein the configuration information of the at least one standard is used for the UE measuring a signal of the at least one standard to obtain a measurement result;
wherein the configuring unit is further configured to configure a unified common control channel for the unified control area; and the sending unit is further configured to send configuration information of the unified common control channel to the UE, wherein the configuration information of the unified common control channel is used for the UE receiving or sending a message over the unified common control channel; and
sending unit (902) configured for selecting a target standard from the different standards based at least on the measurement result corresponding to the at least one standard; and sending the information of the target standard to the UE over the unified common control channel; wherein the information of the target standard is used by the UE to access a transmission channel of the target standard and perform a transmission of service data or control signaling over the transmission channel of the target standard.

7. The network-side device (900) according to claim 6, wherein the broadcast message comprises one or more types of the following information:
an area identifier of the unified control area, wherein the area identifier of the unified control area is used for the UE identifying an area in which the UE is located;
information of a unified location area, wherein the information of the unified location area is used for the UE performing location update determining;
configuration information of at least one standard in the unified control area, wherein the configuration information of the at least one standard is used for the UE measuring a signal of the at least one standard to obtain a measurement result; and
configuration information of a common control channel of at least one standard in the unified control area, wherein the configuration information of the common control channel of the at least one standard is used for the UE selecting a common control channel of one standard from the common control channel of the at least one standard and initiate an air interface connection establishment procedure over the selected common control channel.

8. The network-side device according to claims 6 or 7, wherein the unified common control channel comprises a downlink unified common control channel, and
the sending unit is further configured to send a paging message to the UE over the downlink unified common control channel.

9. The network-side device (900) according to claims 6 or 7, wherein the unified common control channel comprises a downlink unified common control channel and an uplink unified common control channel; and
the network-side device further comprises a receiving unit (903); wherein
the receiving unit (903) is configured to receive, over the uplink unified common control channel, an access request message sent by the UE; and
the sending unit (902) is further configured to send an access response message to the UE over the downlink unified common control channel according to the access request message received by the receiving unit.

10. A user equipment (1000), **characterized in that** the user equipment, UE, is located in a unified control area, the unified control area comprises areas covered by two or more cells of different standards, the unified control area is configured with a unified broadcast control channel, and the user equipment comprises:
a control unit (1001), configured to control, when the UE is in an idle state, the user equipment to camp on the unified broadcast control channel of the unified control area; and
a receiving unit (1002), configured to receive, over the unified broadcast control channel on which the user equipment camps under control of the control unit, a broadcast message sent by a network-side device; wherein the broadcast message comprises configuration information of at least one standard in the unified control area, wherein the configuration information of the at least one standard is used for the UE measuring a signal of the at least one standard to obtain a measurement result; and wherein
the receiving unit (1002) is further configured to receive configuration information of a unified common control channel from the network-side device; and
the control unit (1001) is further configured to receive or send a message over the unified common control channel according to the configuration information of the unified common control channel that is received by the receiving unit; and wherein
the user equipment (1000) is further configured for receiving, from the network-side device, information of a target standard from the different standards selected based at least on the measurement result corresponding to the at least one standard over the unified common control channel, and for requesting access to a transmission channel of the target standard and perform a transmission of service data or control signaling over the transmission channel of the target standard.

11. The user equipment (1000) according to claim 10, wherein
the broadcast message comprises an area identifier of the unified control area, and the control unit is further configured for the UE to identify, according to the area identifier of the unified control area, that the UE is located in the unified control area;
and/or
the broadcast message comprises information of a unified location area, and the control unit is further configured to perform location update determining according to the information of the unified location area;
and/or
the broadcast message comprises configuration information of a common control channel of at least one standard in the unified control area, and the control unit is further configured to: select a common control channel of one standard from the common control channel of the at least one standard according to the configuration information of the common control channel of the at least one standard, and initiate an air interface connection establishment procedure over the common control channel of one standard.

12. The user equipment according to claim 10 or 11, wherein the unified common control channel comprises a downlink unified common control channel; and
the receiving unit is specifically configured to receive, over the downlink unified common control channel, a paging message sent by the network-side device.

13. The user equipment according to claims 10 to 11, wherein the unified common control channel comprises a downlink unified common control channel and an uplink unified common control channel;
the user equipment further comprises a sending unit, configured to send an access request message to the network-side device over the uplink unified common control channel; and
the receiving unit is further configured to receive, over the downlink unified common control channel, an access response message sent by the network-side device according to the access request message.

## Patentansprüche

1. Mobilfunk-Kommunikationsverfahren, wobei das Verfahren auf ein Mobilfunk-Kommunikationssystem anwendbar ist, wobei das Mobilfunk-Kommunikationssystem einen vereinigten Steuerbereich umfasst und der vereinigte Steuerbereich Bereiche umfasst, die durch zwei oder mehr Zellen verschiedener Standards abgedeckt werden, wobei das Verfahren Folgendes umfasst:
Konfigurieren (201) eines vereinigten Rundsende-Steuerkanals für den vereinigten Steuerbereich durch eine netzseitige Vorrichtung; und Senden (202) einer Rundsendenachricht über den vereinigten Rundsende-Steuerkanal zu einem Benutzergerät UE, das sich in dem vereinigten Steuerbereich befindet, durch die netzseitige Vorrichtung, wobei das UE auf dem vereinigten Rundsendesteuerkanal campt, wenn es sich im Leerlaufzustand befindet; wobei die Rundsendenachricht Konfigurationsinformationen mindestens eines Standards in dem vereinigten Steuerbereich umfasst, wobei die Konfigurationsinformationen mindestens eines Standards für das UE verwendet werden, das ein Signal des mindestens einen Standards misst, um ein Messergebnis zu erhalten;
Konfigurieren eines vereinigten gemeinsamen Steuerkanals für den vereinigten Steuerbereich durch die netzseitige Vorrichtung; und Senden von Konfigurationsinformationen des vereinigten gemeinsamen Steuerkanals zu dem UE durch die netzseitige Vorrichtung, wobei die Konfigurationsinformationen des vereinigen gemeinsamen Steuerkanals für das UE verwendet werden, das eine Nachricht über den vereinigten gemeinsamen Steuerkanal empfängt oder sendet; und Auswählen eines Zielstandards aus den verschiedenen Standards durch die netzseitige Vorrichtung auf der Basis mindestens des dem mindestens einen Standard entsprechenden Messergebnisses; und Senden der Informationen des Zielstandards zu dem UE durch die netzseitige Vorrichtung über den vereinigten gemeinsamen Steuerkanal; wobei die Informationen des Zielstandards durch das UE verwendet werden, um auf einen Übertragungskanal des Zielstandards zuzugreifen und über den Übertragungskanal des Zielstandards eine Übertragung von Dienstdaten oder Steuersignalisierung durchzuführen.

2. Verfahren nach Anspruch 1, wobei die netzseitige Vorrichtung eine Einzelfunksteuerung SRC umfasst, und die SRC dafür ausgelegt ist, Funkressourcen der verschiedenen Standards in dem vereinigten Steuerbereich zu verwalten.

3. Verfahren nach einem der Ansprüche 1 oder 2, wobei die Rundsendenachricht eine oder mehrere Arten der folgenden Informationen umfasst:
eine Bereichskennung des vereinigten Steuerbereichs, wobei die Bereichskennung des vereinigten Steuerbereichs durch das UE verwendet wird, um einen Bereich zu identifizieren, in dem sich das UE befindet;
Informationen eines vereinigten Ortsbereichs, wobei die Informationen des vereinigten Ortsbereichs für das UE verwendet werden, das Ortsaktualisierungsbestimmung durchführt; und
Konfigurationsinformationen eines gemeinsamen Steuerkanals mindestens eines Standards in dem vereinigten Steuerbereich, wobei die Konfigurationsinformationen des gemeinsamen Steuerkanals des mindestens einen Standards für das UE verwendet werden, das einen gemeinsamen Steuerkanal eines Standards aus dem gemeinsamen Steuerkanal des mindestens einen Standards auswählt und eine Funkschnittstellenverbindungs-Herstellungsprozedur über den ausgewählten gemeinsamen Steuerkanal einleitet.

4. Verfahren nach einem der Ansprüche 1 bis 3, wobei der vereinigte gemeinsame Steuerkanal einen vereinigten gemeinsamen Abwärtsstrecken-Steuerkanal umfasst und das Verfahren ferner Folgendes umfasst:
Senden (702) einer Funkrufnachricht zu dem UE durch die netzseitige Vorrichtung über den vereinigten gemeinsamen Abwärtsstrecken-Steuerkanal.

5. Verfahren nach einem der Ansprüche 1 bis 3, wobei der vereinigte gemeinsame Steuerkanal einen vereinigten gemeinsamen Abwärtsstrecken-Steuerkanal und einen vereinigten gemeinsamen Aufwärtsstrecken-Steuerkanal umfasst und das Verfahren ferner Folgendes umfasst:
Empfangen (502) einer durch das UE gesendeten Zugangsanforderungsnachricht durch die netzseitige Vorrichtung über den vereinigten gemeinsamen Aufwärtsstrecken-Steuerkanal; und
Senden (503) einer Zugangsantwortnachricht zu dem UE durch die netzseitige Vorrichtung über den vereinigten gemeinsamen Abwärtsstrecken-Steuerkanal gemäß der Zugangsanforderungsnachricht.

6. Netzseitige Vorrichtung (900), umfassend:
eine Konfiguriereinheit (901), ausgelegt zum Konfigurieren eines vereinigten Rundsende-Steuerkanals für einen vereinigten Steuerbereich, wobei der vereinigte Steuerbereich Bereiche umfasst, die durch zwei oder mehr Zellen verschiedener Standards abgedeckt werden; und
eine Sendeeinheit (902), ausgelegt zum Senden einer Rundsendenachricht über den durch die Konfiguriereinheit konfigurierten vereinigten Rundsende-Steuerkanal zu einem Benutzergerät UE, das sich in dem vereinigten Steuerbereich befindet, wobei das UE auf dem vereinigten Rundsende-Steuerkanal campt, wenn es sich im Leerlaufzustand befindet; wobei die Rundsendenachricht Konfigurationsinformationen mindestens eines Standards in dem vereinigten Steuerbereich umfasst, wobei die Konfigurationsinformationen des mindestens einen Standards für das UE verwendet werden, das ein Signal des mindestens einen Standards misst, um ein Messergebnis zu erhalten;
wobei die Konfiguriereinheit ferner ausgelegt ist zum Konfigurieren eines vereinigten gemeinsamen Steuerkanals für den vereinigten Steuerbereich; und die Sendeeinheit ferner ausgelegt ist zum Senden von Konfigurationsinformationen des vereinigten gemeinsamen Steuerkanals zu dem UE, wobei die Konfigurationsinformationen des vereinigten gemeinsamen Steuerkanals für das UE verwendet werden, das eine Nachricht über den vereinigten gemeinsamen Steuerkanal empfängt oder sendet; und
die Sendeeinheit (902), ausgelegt zum Auswählen eines Zielstandards aus den verschiedenen Standards auf der Basis mindestens des dem mindestens einen Standard entsprechenden Messergebnisses; und Senden der Informationen des Zielstandards zu dem UE über den vereinigten gemeinsamen Steuerkanal; wobei die Informationen des Zielstandards durch das UE verwendet werden, um auf einen Übertragungskanal des Zielstandards zuzugreifen und über den Übertragungskanal des Zielstandards eine Übertragung von Dienstdaten oder Steuersignalisierung durchzuführen.

7. Netzseitige Vorrichtung (900) nach Anspruch 6, wobei die Rundsendenachricht eine oder mehrere Arten der folgenden Informationen umfasst:
eine Bereichskennung des vereinigten Steuerbereichs, wobei die Bereichskennung des vereinigten Steuerbereichs durch das UE verwendet wird, um einen Bereich zu identifizieren, in dem sich das UE befindet;
Informationen eines vereinigten Ortsbereichs, wobei die Informationen des vereinigten Ortsbereichs für das UE verwendet werden, das Ortsaktualisierungsbestimmung durchführt;
Konfigurationsinformationen mindestens eines Standards in dem vereinigten Steuerbereich wobei die Konfigurationsinformationen des mindestens einen Standards für das UE verwendet werden, das ein Signal des mindestens einen Standards misst, um ein Messergebnis zu erhalten; und
Konfigurationsinformationen eines gemeinsamen Steuerkanals mindestens eines Standards in dem vereinigten Steuerbereich, wobei die Konfigurationsinformationen des gemeinsamen Steuerkanals des mindestens einen Standards für das UE verwendet werden, das einen gemeinsamen Steuerkanal eines Standards aus dem gemeinsamen Steuerkanal des mindestens einen Standards auswählt und eine Funkschnittstellenverbindungs-Herstellungsprozedur über den ausgewählten gemeinsamen Steuerkanal einleitet.

8. Netzseitige Vorrichtung nach Anspruch 6 oder 7, wobei der vereinigte gemeinsame Steuerkanal einen vereinigten gemeinsamen Abwärtsstrecken-Steuerkanal umfasst und
die Sendeeinheit ferner ausgelegt ist zum Senden einer Funkrufnachricht zu dem UE über den vereinigten gemeinsamen Abwärtsstrecken-Steuerkanal.

9. Netzseitige Vorrichtung (900) nach Anspruch 6 oder 7, wobei der vereinigte gemeinsame Steuerkanal einen vereinigten gemeinsamen Abwärtsstrecken-Steuerkanal und einen vereinigten gemeinsamen Aufwärtsstrecken-Steuerkanal umfasst; und
die netzseitige Vorrichtung ferner eine Empfangseinheit (903) umfasst; wobei die Empfangseinheit (903) ausgelegt ist zum Empfangen einer durch das UE gesendeten Zugangsanforderungsnachricht über den vereinigten gemeinsamen Aufwärtsstrecken-Steuerkanal; und
die Sendeeinheit (902) ferner ausgelegt ist zum Senden einer Zugangsantwortnachricht zu dem UE über den vereinigten gemeinsamen Abwärtsstrecken-Steuerkanal gemäß der durch die Empfangseinheit empfangenen Zugangsanforderungsnachricht.

10. Benutzergerät (1000), **dadurch gekennzeichnet, dass** sich das Benutzergerät UE in einem vereinigten Steuerbereich befindet, der vereinigte Steuerbereich Bereiche umfasst, die durch zwei oder mehr Zellen verschiedener Standards abgedeckt werden, der vereinigte Steuerbereich mit einem vereinigten Rundsende-Steuerkanal konfiguriert ist und das Benutzergerät Folgendes umfasst:
eine Steuereinheit (1001), ausgelegt zum Steuern des Benutzergeräts, wenn sich das UE in einem Leerlaufzustand befindet, auf dem vereinigten Rundsende-Steuerkanal des vereinigten Steuerbereichs zu campen; und
eine Empfangseinheit (1002), ausgelegt zum Empfangen einer durch eine netzseitige Vorrichtung gesendeten Rundsendenachricht über den vereinigten Rundsende-Steuerkanal, auf dem das Benutzergerät unter der Kontrolle der Steuereinheit campt;
wobei die Rundsendenachricht Konfigurationsinformationen mindestens eines Standards in dem vereinigten Steuerbereich umfasst, wobei die Konfigurationsinformationen des mindestens einen Standards für das UE verwendet werden, das ein Signal des mindestens einen Standards misst, um ein Messergebnis zu erhalten; und wobei
die Empfangseinheit (1002) ferner ausgelegt ist zum Empfangen von Konfigurationsinformationen eines vereinigten gemeinsamen Steuerkanals von der netzseitigen Vorrichtung; und
die Steuereinheit (1001) ferner ausgelegt ist zum Empfangen oder Senden einer Nachricht über den vereinigten gemeinsamen Steuerkanal gemäß den Konfigurationsinformationen des vereinigten gemeinsamen Steuerkanals, die durch die Empfangseinheit empfangen werden; und wobei
das Benutzergerät (1000) ferner ausgelegt ist zum Empfangen von Informationen eines Zielstandards aus den verschiedenen Standards, der auf der Basis mindestens des Messergebnisses entsprechend dem mindestens einen Standard ausgewählt wird, von der netzseitigen Vorrichtung über den vereinigten gemeinsamen Steuerkanal und zum Anfordern von Zugang zu einem Übertragungskanal des Zielstandards und Durchführen einer Übertragung von Dienstdaten oder Steuersignalisierung über den Übertragungskanal des Zielstandards.

11. Benutzergerät (1000) nach Anspruch 10, wobei
die Rundsendenachricht eine Bereichskennung des vereinigten Steuerbereichs umfasst und die Steuereinheit ferner dafür ausgelegt ist, dass das UE gemäß der Bereichskennung des vereinigten Steuerbereichs identifiziert, dass sich das UE in dem vereinigten Steuerbereich befindet;
und/oder
die Rundsendenachricht Informationen eines vereinigten Ortsbereichs umfasst und die Steuereinheit ferner ausgelegt ist zum Durchführen von Ortsaktualisierungsbestimmung gemäß den Informationen des vereinigten Ortsbereichs;
und/oder
die Rundsendenachricht Konfigurationsinformationen eines gemeinsamen Steuerkanals mindestens eines Standards in dem vereinigten Steuerbereich umfasst und die Steuereinheit ferner ausgelegt ist zum Auswählen eines gemeinsamen Steuerkanals eines Standards aus dem gemeinsamen Steuerkanal des mindestens einen Standards gemäß den Konfigurationsinformationen des gemeinsamen Steuerkanals des mindestens einen Standards und Einleiten einer Funkschnittstellenverbindungs-Herstellungsprozedur über den gemeinsamen Steuerkanal eines Standards.

12. Benutzergerät nach Anspruch 10 oder 11, wobei der vereinigte gemeinsame Steuerkanal einen vereinigten gemeinsamen Abwärtsstrecken-Steuerkanal umfasst;
und
die Empfangseinheit speziell ausgelegt ist zum Empfangen einer durch die netzseitige Vorrichtung gesendeten Funkrufnachricht über den vereinigten gemeinsamen Abwärtsstrecken-Steuerkanal.

13. Benutzergerät nach Anspruch 10 bis 11, wobei der vereinigte gemeinsame Steuerkanal einen vereinigten gemeinsamen Abwärtsstrecken-Steuerkanal und einen vereinigten gemeinsamen Aufwärtsstrecken-Steuerkanal umfasst;
das Benutzergerät ferner eine Sendeeinheit umfasst, ausgelegt zum Senden einer Zugangsanforderungsnachricht zu der netzseitigen Vorrichtung über den vereinigten gemeinsamen Aufwärtsstrecken-Steuerkanal; und
die Empfangseinheit ferner ausgelegt ist zum Empfangen einer durch die netzseitige Vorrichtung gesendeten Zugangsantwortnachricht über den vereinigten gemeinsamen Abwärtsstrecken-Steuerkanal gemäß der Zugangsanforderungsnachricht.

## Revendications

1. Procédé de communications cellulaires, le procédé étant applicable à un système de communications cellulaires, dans lequel le système de communications cellulaires comprend une zone de commande unifiée, la zone de commande unifiée comprend des zones couvertes par deux ou plusieurs cellules de normes différentes, le procédé comprenant :
la configuration (201), par un dispositif côté réseau, d'un canal de commande de diffusion unifié pour la zone de commande unifiée ; et l'envoi (202), par le dispositif côté réseau, d'un message de diffusion sur le canal de commande de diffusion unifié à un équipement utilisateur, UE situé dans la zone de commande unifiée, moyennant quoi l'UE séjourne sur le canal de commande de diffusion unifié quand il est dans un état inactif ; dans lequel le message de diffusion comprend des informations de configuration d'au moins une norme dans la zone de commande unifiée, dans lequel les informations de configuration de l'au moins une norme sont utilisées pour l'UE qui mesure un signal de l'au moins une norme afin d'obtenir un résultat de mesure ;
la configuration, par le dispositif côté réseau, d'un canal de commande commun unifié pour la zone de commande unifiée ; et l'envoi, par le dispositif côté réseau, d'informations de configuration du canal de commande commun unifié à l'UE, dans lequel les informations de configuration du canal de commande commun unifié sont utilisées pour l'UE qui reçoit ou envoie un message sur le canal de commande commun unifié ; et
la sélection, par le dispositif côté réseau, d'une norme cible parmi les différentes normes en fonction au moins du résultat de mesure correspondant à l'au moins une norme ; et l'envoi, par le dispositif côté réseau, des informations de la norme cible à l'UE sur le canal de commande commun unifié ; dans lequel les information de la norme cible sont utilisées par l'UE pour solliciter un canal de transmission de la norme cible et exécuter une transmission de données de service ou d'une signalisation de commande sur le canal de transmission de la norme cible.

2. Procédé selon la revendication 1, dans lequel le dispositif côté réseau est un contrôleur radio unique, SRC, et le SRC est configuré pour gérer les ressources radio des différentes normes dans la zone de commande unifiée.

3. Procédé selon l'une quelconque des revendications 1 ou 2, dans lequel le message de diffusion comprend un ou plusieurs types des informations suivantes :
un identifiant de zone de la zone de commande unifiée, dans lequel l'identifiant de zone de la zone de commande unifiée est utilisé par l'UE pour identifier une zone dans laquelle se trouve l'UE ;
des informations d'une zone de localisation unifiée, dans lequel les informations de la zone de localisation unifiée sont utilisées pour l'UE qui exécute une détermination d'actualisation de position ; et
des informations de configuration d'un canal de commande commune d'au moins une norme dans la zone de commande unifiée, dans lequel les informations de configuration du canal de commande commune de l'au moins une norme sont utilisées pour l'UE qui sélectionne un canal de commande commune d'une norme parmi le canal de commande commune de l'au moins une norme et le lancement d'une procédure d'établissement de connexion par interface radio sur le canal de commande commun sélectionné.

4. Procédé selon l'une quelconque des revendications 1 à 3, dans lequel le canal de commande commun unifié comprend un canal de commande commun unifié de liaison descendante, et le procédé comprend en outre :
l'envoi (702), par le dispositif côté réseau, d'un radiomessage à l'UE sur le canal de commande commun unifié de liaison descendante.

5. Procédé selon l'une quelconque des revendications 1 à 3, dans lequel le canal de commande commun unifié comprend un canal de commande commun unifié de liaison descendante et un canal de commande commun unifié de liaison montante, et le procédé comprend en outre :
la réception (502), par le dispositif côté réseau et sur le canal de commande commun unifié de liaison montante, d'un message de demande d'accès envoyé par l'UE ; et
l'envoi (503), par le dispositif côté réseau, d'un message de réponse d'accès à l'UE sur le canal de commande commun unifié de liaison descendante conformément au message de demande d'accès.

6. Dispositif côté réseau (900), comprenant :
une unité de configuration (901), configurée pour configurer un canal de commande de diffusion unifié pour une zone de commande unifiée, dans lequel la zone de commande unifiée comprend des zones couvertes par deux ou plusieurs cellules de normes différentes ; et
une unité d'envoi (902), configurée pour envoyer, sur le canal de commande de diffusion unifié configuré par l'unité de configuration, un message de diffusion à un équipement utilisateur, UE, qui est situé dans la zone de commande unifiée, dans lequel l'UE séjourne sur le canal de commande de diffusion unifié quand il est dans un état inactif ; dans lequel le message de diffusion comprend des informations de configuration d'au moins une norme dans la zone de commande unifiée, dans lequel les informations de configuration de l'au moins une norme sont utilisées pour l'UE qui mesure un signal de l'au moins une norme afin d'obtenir un résultat de mesure ;
dans lequel l'unité de configuration est configurée en outre pour configurer un canal de commande commun unifié pour la zone de commande unifiée ; et l'unité d'envoi est configurée en outre pour envoyer des informations de configuration du canal de commande commun unifié à l'UE, dans lequel les informations de configuration du canal de commande commun unifié sont utilisées pour l'UE qui reçoit ou envoie un message sur le canal de commande commun unifié ; et
l'unité d'envoi (902) configurée pour sélectionner une norme cible parmi les différentes normes en fonction au moins du résultat de mesure correspondant à l'au moins une norme ; et envoyer les informations de la norme cible à l'UE sur le canal de commande commun unifié ; dans lequel les informations de la norme cible sont utilisées par l'UE pour solliciter un canal de transmission de la norme cible et exécuter une transmission de données de service ou une signalisation de commande sur le canal de transmission de la norme cible.

7. Dispositif côté réseau (900) selon la revendication 6, dans lequel le message de diffusion comprend un ou plusieurs types des informations suivantes :
un identifiant de zone de la zone de commande unifiée, dans lequel l'identifiant de zone de la zone de commande unifiée est utilisé pour l'UE qui identifie une zone dans laquelle se trouve l'UE ;
des informations d'une zone de localisation unifiée, dans lequel les informations de la zone de localisation unifiée sont utilisées pour l'UE qui exécute une détermination d'actualisation de position ;
des informations de configuration d'au moins une norme dans la zone de commande unifiée, dans lequel les informations de configuration de l'au moins une norme sont utilisées pour l'UE qui mesure un signal de l'au moins une norme pour obtenir un résultat de mesure ; et
des informations de configuration d'un canal de commande commune d'au moins une norme dans la zone de commande unifiée, dans lequel les informations de configuration du canal de commande commune de l'au moins une norme sont utilisées pour l'UE qui sélectionne un canal de commande commune d'une norme parmi le canal de commande commune de l'au moins une norme et qui lance une procédure d'établissement de connexion par interface radio sur le canal de commande commune sélectionné.

8. Dispositif côté réseau selon les revendications 6 ou 7, dans lequel le canal de commande commun unifié comprend un canal de commande commun unifié de liaison descendante, et
l'unité d'envoi est configurée en outre pour envoyer un radiomessage à l'UE sur le canal de commande commun unifié de liaison descendante.

9. Dispositif côté réseau (900) selon les revendications 6 ou 7, dans lequel le canal de commande commun unifié comprend un canal de commande commun unifié de liaison descendante et un canal de commande commun unifié de liaison montante ; et le dispositif côté réseau comprend en outre une unité de réception (903) ; dans lequel l'unité de réception (903) est configurée pour recevoir, sur le canal de commande commun unifié de liaison montante, un message de demande d'accès envoyé par l'UE ; et
l'unité d'envoi (902) est configurée en outre pour envoyer un message de réponse d'accès à l'UE sur le canal de commande commun unifié de liaison descendante conformément au message de demande d'accès reçu par l'unité de réception.

10. Equipement utilisateur (1000), **caractérisé en ce que** l'équipement utilisateur, UE, est situé dans une zone de commande unifiée, la zone de commande unifiée comprend des zones couvertes par deux ou plusieurs cellules de normes différentes, la zone de commande unifiée est configurée avec un canal de commande de diffusion unifié, et l'équipement utilisateur comprend :
une unité de commande (1001), configurée pour commander, quand l'UE est dans un état inactif, à l'équipement utilisateur de séjourner sur le canal de commande de diffusion unifié de la zone de commande unifiée ; et
une unité de réception (1002), configurée pour recevoir, sur le canal de commande de diffusion unifié sur lequel l'équipement utilisateur séjourne sous la commande de l'unité de commande, un message de diffusion envoyé par un dispositif côté réseau ;
dans lequel le message de diffusion comprend des informations de configuration d'au moins une norme dans la zone de commande unifiée, dans lequel les informations de configuration de l'au moins une norme sont utilisées pour l'UE qui mesure un signal de l'au moins une norme afin d'obtenir un résultat de mesure ; et dans lequel l'unité de réception (1002) est configurée en outre pour recevoir des informations de configuration d'un canal de commande commun unifié depuis le dispositif côté réseau ; et
l'unité de commande (1001) est configurée en outre pour recevoir ou envoyer un message sur le canal de commande commun unifié conformément aux informations de configuration du canal de commande commun unifié qui sont reçues par l'unité de réception ; et dans lequel
l'équipement utilisateur (1000) est configuré en outre pour recevoir, du dispositif côté réseau, des informations d'une norme cible parmi les différentes normes sélectionnées en fonction au moins du résultat de mesure correspondant à l'au moins une norme sur le canal de commande commun unifié, et pour demander l'accès à un canal de transmission de la norme cible et exécuter une transmission de données de service ou d'une signalisation de commande sur le canal de transmission de la norme cible.

11. Equipement utilisateur (1000) selon la revendication 10, dans lequel
le message de diffusion comprend un identifiant de zone de la zone de commande unifiée, et l'unité de commande est configurée en outre pour que l'UE identifie, conformément à l'identifiant de zone de la zone de commande unifiée, que l'UE est situé dans la zone de commande unifiée ;
et/ou
le message de diffusion comprend des informations d'une zone de localisation unifiée, et l'unité de commande est configurée en outre pour exécuter une détermination d'actualisation de position conformément aux informations de la zone de localisation unifiée ;
et/ou
le message de diffusion comprend des informations de configuration d'un canal de commande commune d'au moins une norme dans la zone de commande unifiée, et l'unité de commande est configurée en outre pour : sélectionner un canal de commande commune d'une norme parmi le canal de commande commune de l'au moins une norme conformément aux informations de configuration du canal de commande commune de l'au moins une norme, et lancer une procédure d'établissement de connexion par interface radio sur le canal de commande commune d'une norme.

12. Equipement utilisateur selon la revendication 10 ou 11, dans lequel le canal de commande commun unifié comprend un canal de commande commun unifié de liaison descendante ; et
l'unité de réception est configurée spécifiquement pour recevoir, sur le canal de commande commun unifié de liaison descendante, un radiomessage envoyé par le dispositif côté réseau.

13. Equipement utilisateur selon les revendications 10 à 11, dans lequel le canal de commande commun unifié comprend un canal de commande commun unifié de liaison descendante et un canal de commande commun unifié de liaison montante ; l'équipement utilisateur comprend en outre une unité d'envoi, configurée pour envoyer un message de demande d'accès au dispositif côté réseau sur le canal de commande commun unifié de liaison montante ; et
l'unité de réception est configurée en outre pour recevoir, sur le canal de commande commun unifié de liaison descendante, un message de réponse d'accès envoyé par le dispositif côté réseau conformément au message de demande d'accès.
